# FASCICULE DE BREVET EUROPEEN

(11) **EP 4 601 972 B1**
(45) Date de publication et mention de la délivrance du brevet: **16.09.2026**
(21) Numéro de dépôt: 23783907.1
(22) Date de dépôt: 05.10.2023
(51) Int. Cl.: B65G 1/04

(54) **RACK DE STOCKAGE, SYSTÈME DE TRANSPORT ET DE STOCKAGE COMPRENANT UN TEL RACK DE STOCKAGE ET PROCÉDÉ DE FABRICATION D'UN TEL RACK DE STOCKAGE OU D'UN TEL SYSTÈME DE TRANSPORT ET DE STOCKAGE**
LAGERGESTELL, TRANSPORT- UND LAGERUNGSSYSTEM MIT EINEM SOLCHEN LAGERGESTELL UND VERFAHREN ZUR HERSTELLUNG EINES SOLCHEN LAGERREGALS ODER EINES SOLCHEN TRANSPORT- UND LAGERSYSTEMS
STORAGE RACK, TRANSPORT AND STORAGE SYSTEM COMPRISING SUCH A STORAGE RACK AND METHOD FOR MANUFACTURING SUCH A STORAGE RACK OR SUCH A TRANSPORT AND STORAGE SYSTEM

(30) Priorité: 13.10.2022 FR 2210527
(43) Date de publication de la demande: 20.08.2025
(73) Titulaire: Exotec Product France, 59170 Croix (FR)
(72) Inventeur: LEROUGE, Alexis, 59260 HELLEMMES-LILLE (FR); IGLA, Victor, 59178 HASNON (FR)
(74) Mandataire: Plasseraud IP
(86) Numéro de dépôt international: PCT/EP2023/077626
(87) Numéro de publication internationale: WO 2024/078969

(56) Documents cités:
- EP-A1- 3 992 116
- CH-A1- 704 128
- CN-B- 108 706 266
- JP-U- S5 384 812
- US-A- 3 884 153
- US-B2- 10 981 723

## Description

### Domaine technique

La présente divulgation relève du domaine des entrepôts qui comprennent des racks de stockage. Un rack de stockage comprend classiquement une structure verticale, formée par un ensemble de montants verticaux, bien souvent sous forme de profilés métalliques verticaux.

Des dispositifs d'entretoisement, tels que des traverses ou similaires relient typiquement les montants. Ces dispositifs d'entretoisement sont répartis sur la hauteur de la structure verticale et assurent la stabilité de la structure du rack de stockage.

Dans les entrepôts, ces racks de stockage sont destinés à accueillir et stocker des articles, lesdits articles étant ensuite réunis pour constituer des commandes ; ces commandes sont par la suite envoyées à un client final au moyen de transport routier, ferroviaire ou de toute autre nature, ou sorties de l'entrepôt pour être perçues directement par le client final au niveau d'un "drive".

Au sein même de leur structure, les racks de stockage définissent des emplacements de stockage, encore appelés alvéoles. Ces alvéoles sont destinées à recevoir des bacs ou plus généralement des réceptacles, dans lesquels sont placés et stockés des articles.

A cet effet, des couples d'interfaces mécaniques, typiquement sous forme d'équerres, sont solidarisés aux montants, pour assurer le centrage et le soutien des différentes charges au niveau des différentes alvéoles.

La présente divulgation concerne plus particulièrement le domaine des systèmes de stockage et de transport comprenant de tels racks de stockage, et desservis par un système de transport comprenant des véhicules à guidage automatique, les véhicules configurés pour saisir et déposer des articles dans lesdits racks de stockage. De tels systèmes de stockage portent le nom de ASRS selon l'acronyme anglo-saxon "Automated Storage and Retrieval System" (en Français, "Système Automatique de Stockage et de Retrait").

Les véhicules à guidage automatique ci-après désignés par leur abréviation AGV selon l'expression en langue anglaise *« Automatic guided vehicle »* sont des robots qui se déplacent de façon autonome sans l'intervention humaine.

Dans le cas du présent domaine, les AGV se déplacent dans l'entrepôt de stockage, suivant la hauteur du rack de stockage, grâce à la crémaillère portée par l'organe longiligne. Lesdits AGV peuvent également se déplacer suivant au moins une direction, voire les deux directions d'une surface horizontale qui peut être typiquement le sol de l'entrepôt.

### Technique antérieure

De tels systèmes de stockage sont notamment divulgués par le document WO 2019/072432 de la présente Demanderesse.

Comme divulgué par ce document WO2019/072432 des véhicules à guidage automatique sont configurés pour prélever des réceptacles de produits ou articles soutenus par les équerres dans les racks de stockage, et les transporter jusqu'à un autre emplacement typiquement un autre emplacement de stockage ou à un poste de préparation de commande où lesdits articles sont réunis, typiquement de manière à constituer une commande pour un client final.

A cet effet, les véhicules à guidage automatique, peuvent aussi se déplacer verticalement sur les racks de stockage.

Selon cette dernière configuration, lesdits AGV peuvent présenter un châssis équipé de moyens de grimpe. Typiquement, ces moyens comprennent des roues dentées motorisées du véhicule qui sont configurées pour s'engrener avec les maillons d'une chaîne à rouleaux sensiblement tendue, ou encore avec les dents d'une barre de crémaillère s'étendant le long des montants des rack de stockage.

Comme divulgué par WO 2019/072432, le châssis du véhicule à guidage automatique présente encore typiquement un dispositif de préhension comprenant un support mobile par rapport au châssis qui est configuré pour passer d'une position escamotée de chargement d'un réceptacle (typiquement un bac) sur le châssis du véhicule dans laquelle le support est typiquement logé sur le châssis, et jusqu'à une position déployée de déchargement dans laquelle le support mobile s'étend en porte à faux du châssis pour décharger/déposer le réceptacle, typiquement sur l'un des couples d'équerres du rack de stockage.

Ainsi, les AGV disposent de moyens de locomotion et d'orientation, les rendant capables de se déplacer en trois dimensions. Aux deux dimensions planes associées généralement au sol sur lequel se déplacent les AGV, s'ajoute une troisième dimension verticale associée aux racks de stockage sur lesquels les AGV sont capables de monter et de descendre. Des exemples de cette technologie figurent entre autres dans les documents WO 2018 /189110, mais aussi WO 2020 / 056175, EP 3 288 865 et EP 3992116. En particulier, le document EP 3992116 divulgue un rack de stockage selon le préambule de la revendication 1.

Dans un tel état de la technique, les barres de crémaillère (ou les chaines tendues) fixées verticalement aux racks de stockage sont des équipements supplémentaires aux profilés des montants du rack de stockage, qui nécessitent des organes de fixation spécifiques pour leur liaison aux profilés de montants. Leur montage au profilé nécessite bien souvent le respect d'une procédure de montage rigoureuse lors de leur fixation aux montants. Le document FR 3.103.368 A1 est un exemple d'une telle procédure de montage.

Comme compréhensible des étapes de montage du document FR 3.103.368 A1, en particulier lorsque l'organe engrenant fixé au montant est une chaîne, une telle procédure de montage requiert le respect d'un ordre spécifique des étapes de la procédure de montage, y compris des ajustements de différentes dimensions. Ces procédures de montage sont typiquement complexes, longues et donc à la fois coûteuses et chronophages. En outre, elles nécessitent de disposer d'opérateurs qualifiés pour leur mise en œuvre.

Les chaînes présentent un inconvénient supplémentaire par rapport aux crémaillères, en ce qu'elles se détendent et donc s'allongent. Les chaînes requièrent une maintenance régulière pour procéder à leur remplacement, sous peine d'user prématurément la denture de la roue dentée.

Afin de bénéficier d'une transmission requérant une maintenance moins régulière, la personne du métier préfère les crémaillères aux chaînes.

Ces crémaillères sont typiquement en matière plastique. La crémaillère s'étendant sur la hauteur du montant est obtenue typiquement par la succession de plusieurs sections de crémaillère moulées par injection. Les machines de moulage par injection représentent toutefois un investissement coûteux, et leur mise en œuvre requiert par ailleurs une demande énergétique importante.

Un défaut supplémentaire lié au mode de fabrication par moulage par injection est que les pièces plastiques moulées par injection ne sont pas suffisamment identiques dans leurs dimensions, ce qui peut engendrer des ruptures de continuité de la crémaillère entre les différentes sections de la crémaillère. Ces ruptures provoquent des heurts lors du déplacement vertical de l'AGV : ceci engendre une augmentation du niveau sonore non négligeable dans l'entrepôt et ces chocs peuvent aussi avoir des conséquences mécaniques directes sur l'intégrité des robots.

Selon la présente Demanderesse, il existe depuis longtemps un besoin pour un système de de transport et de stockage offrant un meilleur rapport coût-performance, de précision accrue, voire simplifiant grandement les procédures de montage des barres de crémaillère (ou chaîne tendue) aux racks de stockage.

### Résumé

La présente divulgation vient améliorer de manière notable cette situation. L'invention est décrite dans l'ensemble des revendications ci-jointes.

La présente divulgation est relative, selon un premier aspect, à un organe longiligne présentant au moins une crémaillère destinée à engrener avec une roue dentée pivotante autour d'un axe de rotation de la roue dentée, ladite au moins une crémaillère comprenant des premières dents réparties suivant une direction en longueur dudit organe longiligne, destinées à engrener avec des deuxièmes dents sur un diamètre de la roue dentée.

Selon la présente divulgation, l'organe longiligne est un profilé métallique, et dans lequel les premières dents sont formées par des languettes pliées qui sont obtenues par pliage de la matière du profilé métallique venant d'une série d'ouvertures dans une paroi du profilé réparties suivant la direction en longueur dudit organe longiligne, lesdites languettes en saillie de ladite paroi, d'un côté de la paroi.

Les caractéristiques facultatives suivantes peuvent être prises seules, et en combinaison avec la présente divulgation selon le premier aspect.

Selon un mode de réalisation, le profilé métallique peut être avantageusement une poutre de section tubulaire ou de section semi tubulaire, structurel. Selon un tel mode de réalisation, le profilé peut comprendre des lignes de pli longitudinales s'étendant parallèlement entre elles le long de l'organe longiligne définissant les angles de la section du profilé. Un tel profilé tubulaire ou semi-tubulaire, structurel peut être typiquement obtenu par les techniques de profilage.

On entend par poutre de section tubulaire, une poutre dont le profilé métallique est de section fermée, par exemple de section rectangulaire. On entend par poutre de section semi-tubulaire, une poutre dont le profilé métallique est de section ouverte, par exemple de section en U.

Selon un autre mode de réalisation le profilé métallique est une feuille métallique telle qu'une lame dans laquelle sont formées les languettes, à savoir un composant non structurel par comparaison à une poutre de section tubulaire ou de section semi tubulaire. Un tel organe longiligne peut être directement obtenu par découpe et emboutissage pour la réalisation des languettes, sans nécessiter d'opération de profilage.

Selon un mode de réalisation, les languettes pliées peuvent être inclinées dans le même sens par rapport à la direction longitudinale de l'organe longiligne, les languettes définissant des surfaces dorsales en regard des ouvertures, et des surfaces fonctionnelles d'appui, opposées aux surfaces dorsales, configurées pour engager avec les deuxièmes dents de la roue dentée pour permettre un effort de poussée de la roue dentée sur la dite au moins une crémaillère dans un premier sens d'avancement le long de la crémaillère, et dans lequel les dents de ladite au moins une crémaillère sont dépourvues de surfaces fonctionnelles d'appui configurées pour permettre un effort de poussé de la roue dentée sur ladite au moins une crémaillère suivant une second sens d'avancement, opposé au premier sens d'avancement.

Selon un mode de réalisation, les languettes sont attenantes à la paroi du profilé présentant lesdites ouvertures, lesdites languettes attenantes par des lignes de pli transversales orientées sensiblement transversalement à la direction longitudinale de l'organe longiligne, en particulier transversalement aux lignes de pli transversales lorsque le profilé de la poutre est de section tubulaire ou de section semi tubulaire, les lignes de pli transversales parallèles entre elles, réparties suivant la longueur dudit organe longiligne et dans lequel les languettes présentent au moins une partie principale s'étendant chacune suivant une direction D3, perpendiculaire à la ligne de pli transversale, depuis une extrémité proximale de la ligne de pli transversale jusqu'à une extrémité distale en définissant une surface fonctionnelle d'appui, configurée pour engager avec les deuxièmes dents de la roue dentée.

Selon un mode de réalisation, l'organe longiligne peut être agencé de sorte que les languettes de ladite au moins une crémaillère sont orientées dans le sens descendant dudit organe longiligne, depuis ladite extrémité proximale jusqu'à l'extrémité distale, lesdites surfaces fonctionnelles d'appui disposées supérieures aux languettes, configurées de sorte que la gravité exercée sur la roue dentée maintient au moins l'une des deuxièmes dents de la roue dentée contre la surface fonctionnelle d'appui d'une des languettes des premières dents de l'organe longiligne.

Selon un mode de réalisation, l'angle S3 entre la direction D3 de la portion principale de la languette, et la direction longitudinale de l'organe longiligne peut être inférieur à 90°, de préférence compris entre 50° et 80°, typiquement de 70° et de sorte que l'angle de pression α complémentaire est typiquement compris entre 10° et 40°, par exemple de 20°.

Selon un mode de réalisation, la languette peut comprendre outre ladite portion principale définissant la surface fonctionnelle d'appui, au moins une portion de soutien, prolongeant latéralement la portion principale d'un côté de la portion principale, ou encore deux portions de soutien prolongeant latéralement la portion principale respectivement des deux côtés de la portion principale. La portion de soutien, ou chacune des deux portions de soutien peut s'étendre en saillie de la portion principale de la languette, du côté opposé à la surface fonctionnelle d'appui pour constituer un moyen de renfort entre la portion principale et le profilé, le moyen de renfort s'opposant à un fléchissement de la languette lorsque la surface fonctionnelle d'appui, supérieure, subit un effort transmis par les deuxièmes dents de la roue dentée.

Selon un mode de réalisation, la portion de soutien, ou tout ou partie des portions de soutien peut relier la portion principale de la languette à la paroi du profilé portant les ouvertures qui est une paroi plane.

Selon un mode de réalisation, la paroi du profilé portant les ouvertures peut être contenue partiellement dans un plan en définissant une paroi plane, la paroi portant les ouvertures étant prolongée de part et d'autre des languettes, par deux parois latérales s'étendant en saillie de la paroi plane, saillantes du même côté que les languettes, les deux parois latérales jouxtant les languettes, et dans lequel les deux portions de soutien relient respectivement la portion principale aux dites deux parois latérales.

La présente invention est relative à un rack de stockage comprenant une structure verticale comprenant plusieurs montants s'étendant verticalement, parallèlement entre eux, et maintenus entre eux par un système d'entretoisement, et dans lequel les montants sont formés en tout ou partie par des organes longilignes selon la présente divulgation.

Avantageusement et selon un deuxième aspect l'organe longiligne (ou chaque organe longiligne) peut être formé par un profilé métallique qui est la poutre de section tubulaire ou semi tubulaire assurant la résistance structurelle du montant qui est un composant d'un seul tenant, typiquement obtenu par les techniques de profilage et de découpe par emboutissage.

Alternativement et selon un troisième aspect, la présente divulgation la présente divulgation n'exclut par une fabrication en plusieurs parties et est ainsi relative à un assemblage de montant comprenant :
- un organe longiligne selon la présente divulgation, dans lequel le profilé est la feuille métallique portant lesdites languettes de ladite au moins une crémaillère,
- un second profilé de montant, structurel, typiquement tubulaire ou semi tubulaire, et dans lequel la feuille métallique de l'organe longiligne portant la crémaillère est fixée longitudinalement au second profilé structurel de montant.

La fixation entre la feuille métallique portant la crémaillère et le second profilé peut être par des organes de fixation, tels que rivets, la soudure, un sertissage.

Selon un **quatrième aspect,** la présente divulgation est relative à un rack de stockage comprenant une structure verticale comprenant plusieurs montants s'étendant verticalement, parallèlement entre eux, et maintenus entre eux par un système d'entretoisement, et dans lequel les montants sont formés en tout ou partie par des assemblages de montant selon la présente divulgation.

La présente invention est relative à un système de transport et de stockage comprenant un rack de stockage selon l'invention et au moins un véhicule comportant un châssis, embarquant des moyens de grimpe, comprenant une ou plusieurs roues dentées motorisées configurées pour assurer le déplacement du véhicule le long des montants de la structure verticale du rack de stockage, à la montée ou à la descente en transformant un mouvement de rotation de la ou des roues dentée en un mouvement du véhicule le long dudit ou des organes longilignes par l'engrènement des premières dents de ladite au moins une crémaillère et des deuxièmes dents de la roue dentée.

Le système peut comprendre les caractéristiques facultatives suivantes, seules ou en combinaison :

Selon un mode de réalisation, le rack de stockage peut être configuré pour le soutien d'une pluralité de réceptacle, ledit rack de stockage comprenant une pluralité de couple d'interfaces mécaniques qui sont fixées aux montants, réparties suivant la hauteur du rack pour former plusieurs alvéoles de stockage, chaque couple d'interfaces comprenant :
-- une première interface fixée à au moins deux montants de la structure verticale, en porte-à-faux des deux montants
-- une deuxième interface fixée à au moins deux autres montants de la structure verticale, en porte-à-faux des deux autres montants. Des portions de soutien de la première interface et de la deuxième interface sont orientées l'une vers l'autre en porte à faux des montants, configurées pour assurer le soutien d'un réceptacle soutenu par les deux portions de soutien des deux interfaces des deux côtés du réceptacle. Le véhicule peut comprendre un système de chargement/déchargement déployable configuré pour :
   - charger un réceptacle depuis une première position escamotée au-dessus du châssis jusqu'à une deuxième position déployée pour laquelle ledit réceptacle est en appui simultané sur la première interface et la deuxième interface, ou
   - extraire un réceptacle depuis la deuxième position en appui sur la première interface et la deuxième interface d'un couple d'interfaces et le charger dans la première position escamotée.

Selon un mode de réalisation, le véhicule comprend un mécanisme de débrayage configuré pour passer la ou les roues dentées des moyens de grimpe du véhicule d'une position embrayée pour laquelle les premières dents de l'organe longiligne et les deuxième dents de la roue dentée sont en prise, jusqu'à une position débrayée pour laquelle la roue dentée ou les roues dentées portant les deuxièmes dents, d'une part, et les organes longilignes portant les premières dents, d'autre part, sont écartés avec échappement entre les premières dents et les deuxièmes dents. Le véhicule peut comporter des moyens de roulage sur une surface horizontale, autorisant le déplacement du véhicule sur la surface horizontale dans ladite position débrayée, une fois le véhicule séparé de la structure verticale du rack de stockage.

Selon un mode de réalisation, la roue dentée est articulée suivant l'axe de rotation sur un support du véhicule,
et dans lequel le véhicule est équipé d'un système de guidage comportant un organe de guidage, tel qu'un galet d'appui, ou un patin de glissement, coopérant avec une paroi de guidage dudit profilé dudit organe longiligne,
et dans lequel le système de guidage est configuré de sorte que la coopération de l'organe de guidage contre la paroi de guidage assure un maintien en prise entre les premières dents de ladite au moins une crémaillère et les deuxièmes dents de la roue dentée.

Enfin la présente invention concerne un procédé de fabrication d'un rack de stockage selon la présente invention, ou d'un système de transport et de stockage selon la présente invention, dans lequel on obtient le profilé formant l'organe longiligne, éventuellement de section tubulaire ou semi tubulaire par les techniques de profilage, et on obtient lesdites languettes pliées venant de la matière des ouvertures dans la paroi du profilé par les techniques de découpe et emboutissage.

### Brève description des dessins

D'autres caractéristiques, détails et avantages apparaîtront à la lecture de la description détaillée ci-après, et à l'analyse des dessins annexés, sur lesquels :
**Fig. 1**

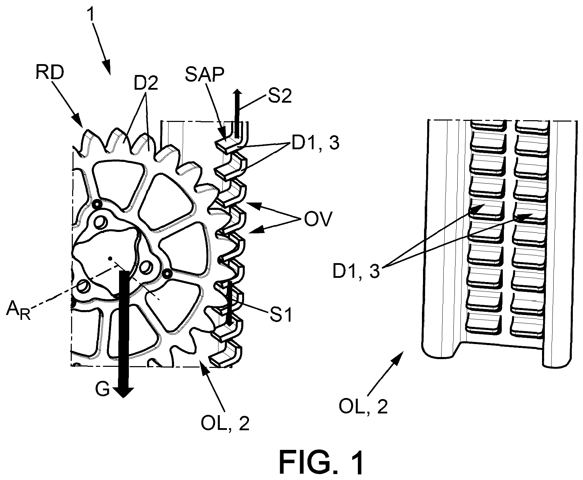

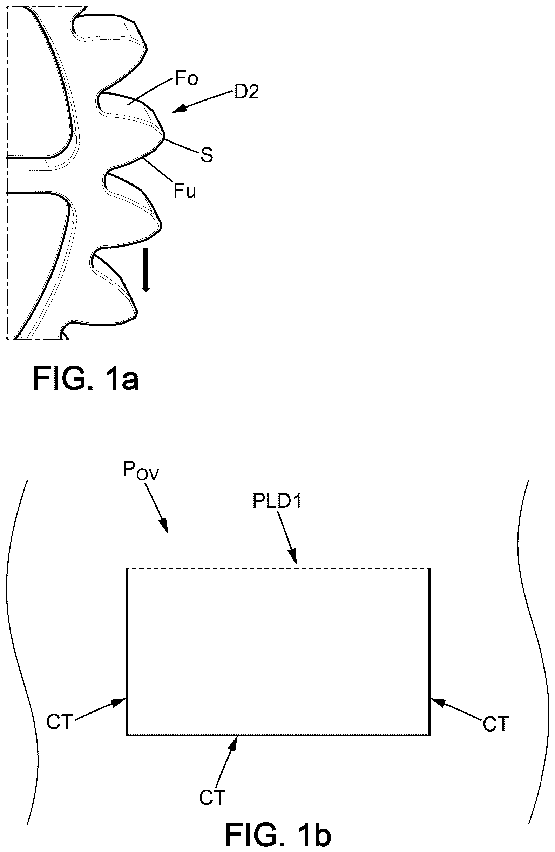

   [Fig. 1] La figure 1 est une vue d'un organe longiligne selon un premier mode de réalisation :
   - à droite, un organe longiligne selon la présente divulgation sous forme d'un profilé s'étendant rectilignement et comprenant une paroi présentant des premières dents, selon deux séries en parallèle formant deux crémaillères en parallèle , chaque série de dents s'étendant longitudinalement à l'organe longiligne, les premières dents formées par des languettes pliées venant d'ouverture dans ladite paroi, obtenues par les techniques de découpe et emboutissage,
   - à gauche, d'une vue de coupe passant par un plan vertical à la paroi présentant les languettes pliées de la crémaillère, la vue illustrant une roue dentée appartenant à un AGV (non représenté sur la figure) et étant pourvue sur sa périphérie des dents de la roue dentée, appelées deuxièmes dents, venant en prise avec des surfaces fonctionnelles d'appui, supérieures, des languettes formant les premières dents de la crémaillère.
**Fig. 1a**
   [Fig. 1a] est une vue de détail de la denture de la roue dentée appartenant à un robot (non représenté sur ladite figure), chaque dent présentant deux flancs, de part et d'autre d'un sommet de la dent, les flancs présentant chacun un profil selon une développant de cercle, susceptible de rouler sur la denture de la crémaillère.
**Fig.1****b**
   [Fig. 1b] est une vue schématique de la découpe en U dans la paroi du profilé portant les ouvertures, permettant l'obtention d'une languette, la découpe en U comprenant une ligne de coupe inférieure, et deux lignes de coupe latérale, permettant lors de l'emboutissage, la formation de la languette par une ligne de pli transversale reliant les deux extrémités du U de la découpe.
**Fig. 2**

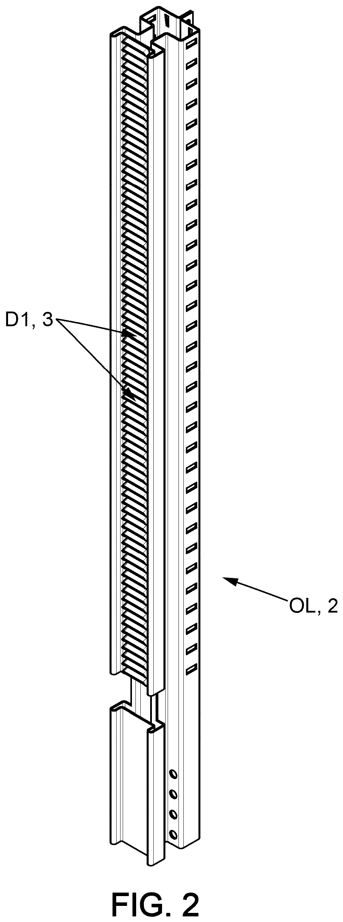

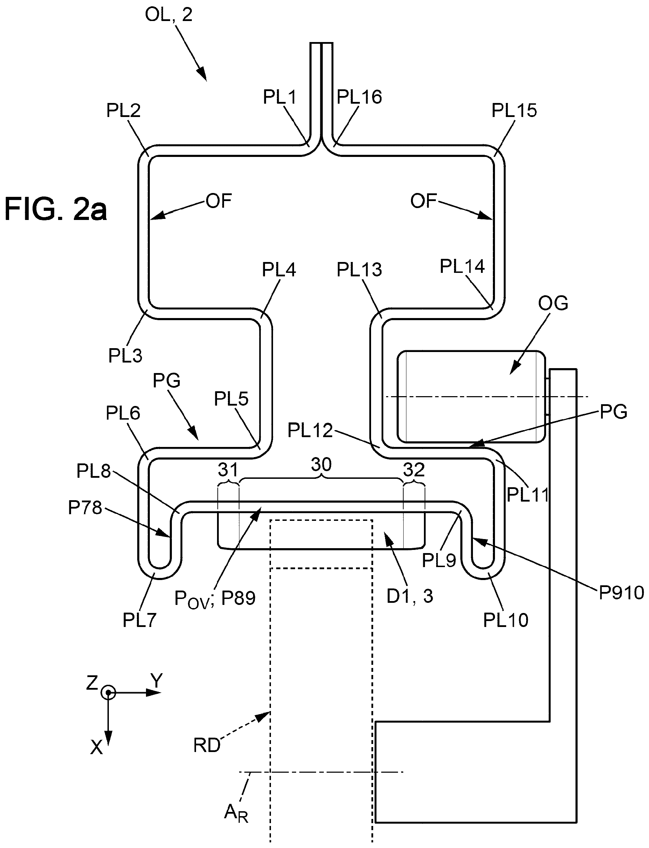

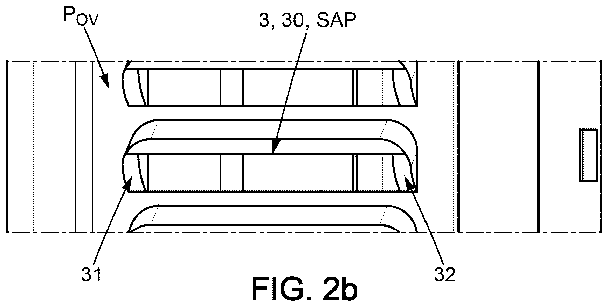

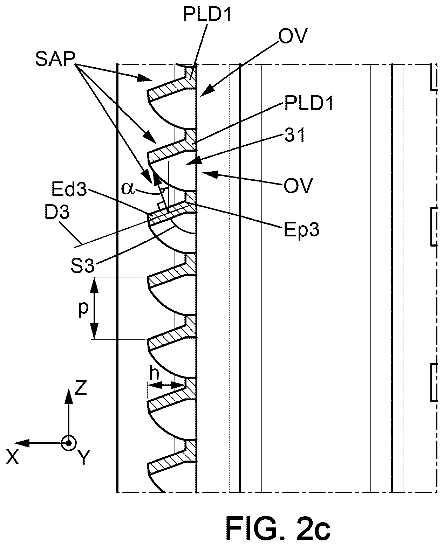

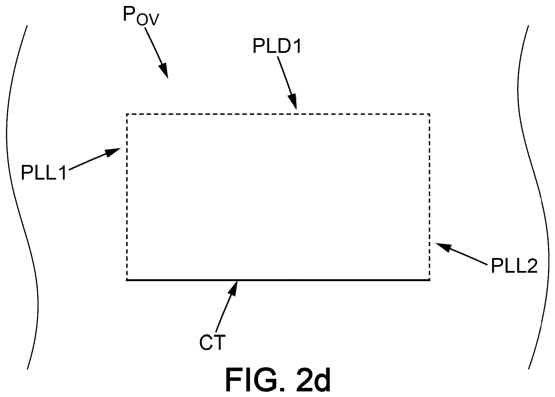

   [Fig. 2] est une vue en perspective d'un profilé d'un organe longiligne selon un deuxième mode de réalisation, offrant une résistance améliorée à la fatigue par rapport à la conception de la figure 1.
**Fig.2a**
   [Fig. 2a] est une vue de coupe du profilé amélioré de la figure 2, selon un plan perpendiculaire à l'axe du profilé, illustrant la section du profilé y compris les différentes lignes de pli longitudinales du profilé, ainsi que schématiquement de sa coopération avec une roue dentée montée rotative sur un support appartenant à un robot (non représenté ici), dont les deuxièmes dents engrènent avec les languettes pliées formant les premières dents de l'organe longiligne, la vue illustrant de manière notable un organe de guidage (sous forme d'un galet) articulé au support, suivant un axe de rotation parallèle à l'axe de rotation de la roue dentée, et coopérant au guidage avec une paroi de guidage du profilé pour assurer un maintien en prise des dents entre elles (premières dents et deuxièmes dents).
**Fig.2b**
   [Fig. 2b] est une vue de détail d'une languette pliée du profilé selon la figure 2, qui présente une portion principale, formant une surface fonctionnelle d'appui, destinée à entrer en contact avec l'une des deuxièmes dents de la roue dentée (non représentée), en particulier un contact roulant entre la surface fonctionnelle d'appui et un profil en développante de cercle de la denture de la roue dentée, mais encore deux portions de soutien, prolongeant latéralement la portion principale de la languette; chacune des deux portions de soutien s'étend en saillie de la portion principale de la languette, du côté opposé à la surface fonctionnelle d'appui, les deux portions de soutien formant avec la portion principale une arche pour constituer un moyen de renfort entre la portion principale et le profilé. Un tel moyen de renfort s'oppose à un fléchissement de la languette lorsque la surface fonctionnelle d'appui, supérieure, subit un effort transmis par les deuxièmes dents de la roue dentée. En particulier les deux portions de soutien relient la portion principale, respectivement des deux côtés de la portion principale, à la paroi du profilé portant les ouvertures, la paroi étant plane sensiblement parallèle à l'axe longitudinal de l'organe longiligne.
**Fig.2c**
   [Fig. 2c] est une vue de coupe, selon un plan passant par un axe longitudinal de l'organe longiligne, illustrant en coupe les languettes pliées, depuis leur extrémité proximale jouxtant des lignes de pli transversales, jusqu'à leur extrémité distale, libre, la languettes étant toutes pliées vers le bas, définissant des surfaces fonctionnelles d'appui, supérieures.
**Fig. 2d**
   [Fig. 2d] est une vue schématique de la découpe dans la paroi du profilé portant les ouvertures, permettant l'obtention d'une languette, la découpe consistant en une ligne de coupe inférieure, permettant lors de l'emboutissage, la formation de la languette par une ligne de pli transversale et deux lignes de plis latérales, reliant respectivement une extrémité de la ligne de pli transversale à une ligne de coupe inférieure.
**Fig.3**

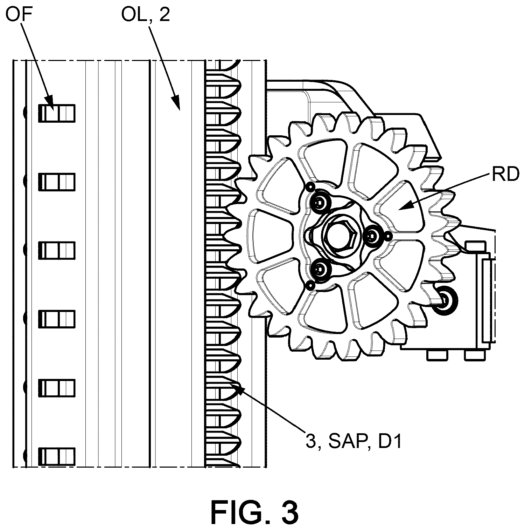

   [Fig. 3] est une vue du système roue et crémaillère qui comprend un organe longiligne selon la figure 2, en engrènement avec une roue dentée appartenant à un robot (non représenté).
**Fig.4**

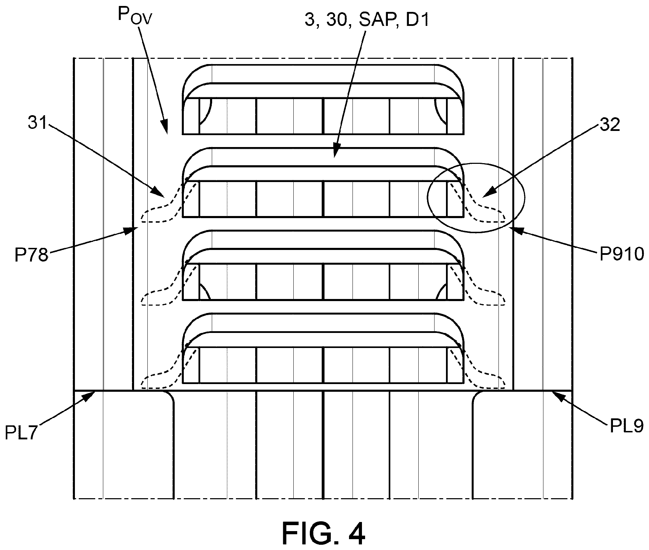

   [Fig. 4] est une variante de la figure 2b pour laquelle les deux portions de soutien, latérales, de la languette relient la portion principale, non pas à la paroi plane présentant les ouvertures d'où viennent les languettes pliées comme illustré à la figure 2b, mais à deux parois latérales, sensiblement parallèles, s'étendant en saillie d'une portion plane de la paroi portant les ouvertures, saillantes du même côté que les languettes, les deux parois latérales jouxtant les languettes, les ouvertures s'étendant non seulement dans la paroi plane, mais encore dans les deux parois latérales.
**Fig.5**

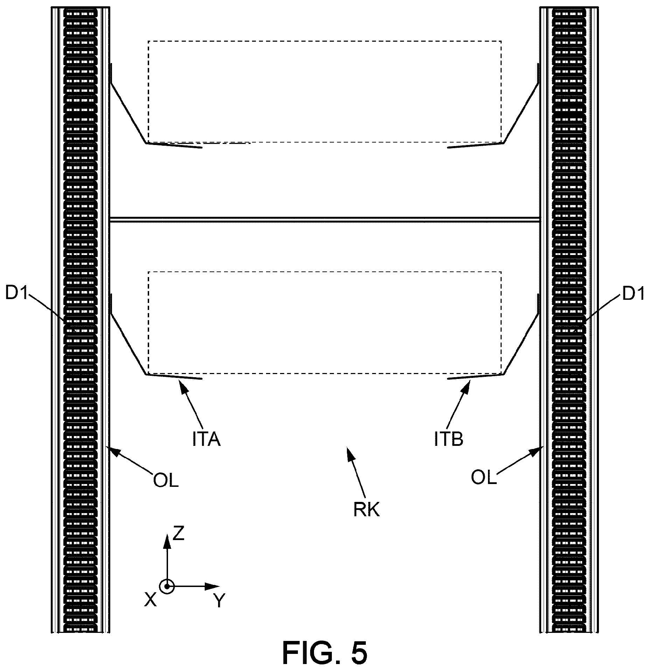

   [Fig. 5] est une vue de face d'un rack de stockage présentant une structure verticale comprenant des montants formés par des profilés des organes longilignes selon la présente divulgation, mais encore une pluralité de couples d'interfaces mécaniques qui sont fixés aux montant, répartis suivant la hauteur du rack de stockage pour former plusieurs alvéoles de chargement/déchargement, chaque couple d'interfaces comprenant :
   - une première interface fixée à au moins deux montants de la structure verticale, en porte-à-faux des deux montants
   - une deuxième interface fixée à au moins deux autres montants de la structure verticale, en porte-à-faux des deux autres montants.
**Fig.6**

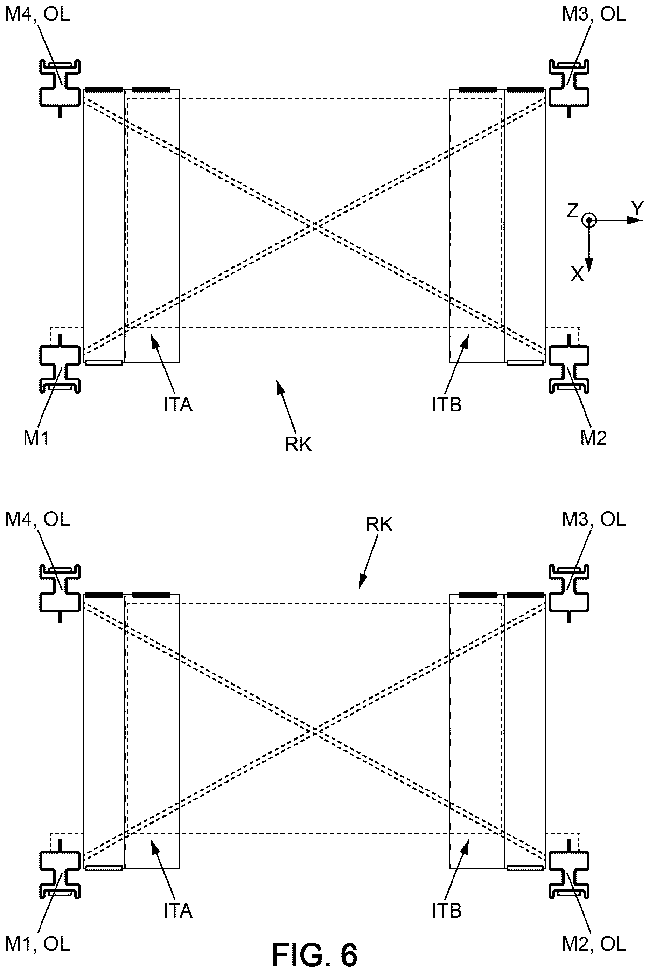

   [Fig. 6] est une vue de dessus illustrant deux racks de stockage, espacés, entre eux, suivant la direction X, en formant une allée entre les deux racks de stockage, chaque rack de stockage étant équipé des montants sous forme de profilés des organes longilignes selon la figure 2.
**Fig.7**

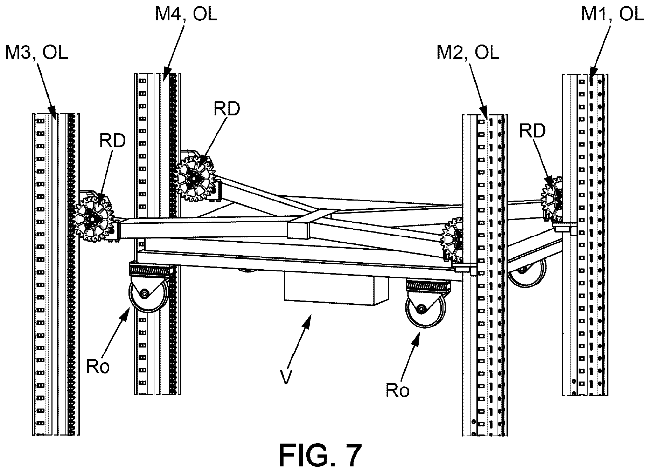

   [Fig. 7] est une vue en perspective d'un véhicule à guidage automatique comprenant quatre roues dentées, motorisées, qui engrènent respectivement sur les dentures des crémaillères de quatre organes longilignes pour assurer le déplacement à la montée ou à la descente du véhicule le long des poutres, formant les montants des racks de stockage.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La présente divulgation concerne, selon un premier aspect, un organe longiligne OL présentant au moins une crémaillère destinée à engrener avec une roue dentée RD pivotante autour d'un axe de rotation AR de la roue dentée.

A cet effet, ladite au moins une crémaillère comprend des premières dents D1, réparties suivant une direction en longueur dudit organe longiligne, et la roue dentée RD comprend des deuxièmes dents D2 sur un diamètre de la roue dentée.

Par convention, on désigne par « premières dents » référencées D1, les dents de la denture de la crémaillère, et par « deuxièmes dents » référencées D2 les dents de la denture de la roue dentée RD, sans qu'une interprétation limitative puisse être donnée en raison de l'emploi de « premières » ou « deuxièmes » qui ont pour seul but de la différencier les dents de la crémaillère et les dents de la roue dentée.

D'une manière générale, l'organe longiligne peut comprendre une unique crémaillère formée d'une denture formée par une série de languettes 3, et comme par exemple illustré à titre indicatif à la figure 2. Selon d'autres modes de réalisations possible, l'organe longiligne peut porter plusieurs crémaillères suivant des directions parallèles, par exemple deux crémaillères, constituées par deux séries de languettes 3, s'étendant suivant deux directions parallèles entre elles, et comme par exemple visible à la figure 1. Ces deux crémaillères peuvent notamment permettre à deux roues dentées appartenant à deux AGV distincts de se déplacer simultanément sur le même profilé.

La roue dentée et ladite au moins une crémaillère forment un système roue dentée et crémaillère 1 qui est configuré pour transformer un mouvement de rotation de la roue dentée RD en un mouvement le long dudit organe longiligne OL, par engrènement des deuxièmes dents de la roue dentée RD et des premières dents D1 de ladite au moins une crémaillère.

Dans le mode d'application de la présente Demande, la roue dentée est embarquée à l'AGV, alors que ladite au moins une crémaillère est solidaire du rack de stockage. Cette roue dentée engrène avec ladite au moins une crémaillère de l'organe longiligne en vue de permettre le déplacement vertical dudit AGV vers le haut ou vers le bas des racks de stockage. La présente divulgation ne se limite pas à cette application et peut couvrir tout autre application nécessitant un système roue dentée et crémaillère, en particulier en offrant une alternative performance coût optimisée.

L'organe longiligne OL peut être typiquement rectiligne de sorte que le mouvement le long de l'organe longiligne OL est un mouvement rectiligne. La présente divulgation n'exclut pas que l'organe longiligne ne soit pas rectiligne, et par exemple qu'il présente un cintrage. Le mouvement le long de l'organe longiligne reproduit alors le rayon de courbure de l'organe longiligne.

De manière notable, selon la présente divulgation, l'organe longiligne est formé par un profilé métallique, et de préférence une poutre de section tubulaire ou semi-tubulaire. Un tel profilé métallique de poutre, en particulier lorsque tubulaire ou semi tubulaire peut être typiquement obtenu à partir d'une feuille de métal ou tôle, par exemple une feuille d'acier par les techniques de formage, telles que les techniques de profilage. Le métal utilisé peut être typiquement un acier ou un aluminium.

La poutre de section tubulaire est une poutre dont le profilé métallique est de section fermée, par exemple de section rectangulaire. La poutre de section semi-tubulaire est une poutre dont le profilé métallique est de section ouverte, par exemple de section en U.

Le profilage est une technique qui assure une déformation en continu par formage à froid à partir d'un feuillard de métal en feuilles ou typiquement en bobines fine ; le feuillard typiquement 0,5 à 2mm d'épaisseur. Le feuillard peut prendre la forme d'une bobine de tôle métallique, La bobine est déroulée, puis poinçonnée pour avoir les découpes dans la paroi du profilé. Des galets successifs viennent progressivement plier le feuillard dans sa direction de déroulage pour former la section du profilé. Une machine vient couper ce profilé continu en différentes sections aux longueurs voulues.

L'épaisseur de la feuille métallique peut être typiquement compris entre 0,5 mm et 2 mm. La section tubulaire ou semi tubulaire du profilé métallique permet d'assurer les performances de la poutre en termes de rigidité, de résistance à la flexion, ou encore de résistance à la torsion de la poutre.

La figure 2a donne à titre d'exemple non limitatif, un profilé de section tubulaire, c'est-à-dire de section fermée. La présente divulgation s'applique sans difficulté également au profilé de section semi tubulaire, c'est-à-dire de section ouverte.

De manière notable également, les premières dents D1 sont formées par des languettes 3 pliées qui sont obtenues par pliage de la matière du profilé métallique venant d'une série d'ouvertures OV dans une paroi P_{OV} du profilé, les ouvertures réparties suivant la direction en longueur dudit organe longiligne OL.

De manière générale, et comme illustrées à titre indicatif à la figure 1, lesdites languettes 3 s'étendent en saillie de ladite paroi, d'un côté de la paroi. Ces languettes pliées 3 constituant les premières dents D1 de ladite au moins une crémaillère sont avantageusement d'un seul tenant avec le profilé métallique et peuvent être avantageusement obtenues par les techniques de découpe et emboutissage.

L'organe longiligne selon la présente divulgation est donc avantageusement un élément d'un seul tenant, qui peut être obtenu typiquement à moindre coût à partir d'une feuille de métal par les techniques de profilage, ainsi que découpe et emboutissage.

Cet élément d'un seul tenant porte avantageusement, au moins selon un premier mode de réalisation, simultanément :
- une fonction de poutre structurelle, de masse maitrisée en ce que la poutre formée d'un profilé, tubulaire ou semi tubulaire, est creuse, mais encore,
- une fonction de crémaillère.

Un tel organe longiligne trouve ainsi une application particulière, au moins selon un premier mode de réalisation, comme montant structurel d'une structure de rack de stockage comprenant une crémaillère intégrée, obtenue typiquement par emboutissage d'une tôle, et typiquement en remplacement d'un ensemble comprenant un profilé de montant, d'une part, et une crémaillère (ou une chaîne tendue), d'autre part, le profilé de montant et la crémaillère (ou chaine tendue) selon cet état de la technique typiquement illustré par le document WO 2019/072432 A1 étant des composants distincts, nécessitant d'être fixés l'un à l'autre par des systèmes de fixation spécifiques.

L'organe longiligne selon ce premier mode de réalisation de la présente divulgation portant la double fonction poutre / crémaillère est un progrès notable par rapport à cet état de la technique en termes de :
- ratio coût-performance en raison de la simplification,
- ratio coût-masse, en raison de la suppression de la chaîne tendue ou encore de la crémaillère qui présentent typiquement une masse supérieure aux languettes de la crémaillère selon la présente divulgation.

Une conception de la crémaillère par emboutissage d'une tôle permet par ailleurs d'obtenir une précision supérieure sur la réalisation de la denture de la crémaillère, par rapport à une fabrication de la crémaillère en différentes sections plastiques moulées par injection. Une telle précision améliore le fonctionnement la transmission roue dentée / crémaillère, et diminue le bruit en fonctionnement.

L'organe longiligne selon la présente divulgation apporte encore un progrès notable lors du montage du rack de stockage en ce qu'il supprime de fait la nécessité de réglage entre le profilé de poutre, d'une part, et la crémaillère d'autre part, qui forment un élément d'un seul tenant obtenu à la fabrication.

Il est du mérite de la Demanderesse d'avoir identifié que, dans l'état de la technique décrit en introduction, à savoir comprenant des véhicules (ou chariots motorisés) pourvus de roues dentées motorisées, engrenant avec des crémaillères verticales solidaires des montant du rack de stockage, tel que par exemple divulgué par WO 2019/072432 A1, seuls les flancs supérieurs des dents de la crémaillère entrent en contact avec les dents de la roue dentée, et plus encore toujours suivant un seul flanc (ou profil en développante de cercle) de chaque dent de la roue dentée, et du fait de la gravité qui s'exerce sur le véhicule et la roue dentée, qui maintient toujours ce contact, que le véhicule motorisé pourvu de la roue dentée motorisé se déplace à la montée ou à la descente le long des montants du rack de stockage, suivant les deux sens de rotation opposés de la roue dentée.

Plus encore, et fort de cette constatation, il est du mérite de la Demanderesse d'avoir conçu une crémaillère dont les dents ne présentent qu'une seule surface fonctionnelle d'appui par dent assurant une poussée de la roue dentée dans un seul sens d'avancement (ci-après désigné « premier sens d'avancement »), et contrairement à l'état de la technique pour lequel chaque dent de la crémaillère présente, de part et d'autre du sommet de la dent, deux surfaces fonctionnelles d'appui configurées pour assurer un déplacement de la roue dentée respectivement par des poussées autorisant deux sens d'avancement opposés.

En raison de cette simplification, la présente divulgation autorise une fabrication par emboutissage qui nécessite de déformer beaucoup moins de métal par rapport à une fabrication qui nécessiterait d'obtenir par emboutissage deux surfaces fonctionnelles d'appui par dent pour autoriser des poussées selon deux sens d'avancement opposés.

La présente divulgation est notable en ce qu'elle présente de préférence une seule surface fonctionnelle d'appui par dent de ladite au moins une crémaillère, ce qui autorise avantageusement une fabrication par emboutissage, de hauteur de dent « h » non négligeable, et pour des pas de denture « p », même de petite dimension. En effet une fabrication par emboutissage d'une denture, avec deux surfaces fonctionnelles d'appui par dent, serait limitée à une denture de très faible hauteur et/ou de pas de denture de grande dimension.

Le pas de la denture p, illustré à la figure 2c, à savoir la distance séparant deux surfaces fonctionnelles d'appui SAP de deux premières dents D1 peut être typiquement compris entre 5 mm et 15 mm, telle que 10 mm.

La hauteur h de la première dent D1, à savoir la dimension suivant le pied de la dent perpendiculairement à l'axe longitudinale de l'organe longiligne peut être typiquement compris entre 3,5 mm et 11 mm, telle que 7mm.

Selon la présente divulgation, l'organe longiligne s'étend ainsi de préférence à la verticale ou à tout le moins de manière inclinée, de sorte que les deuxièmes dents D2 de la roue dentée, entrent toujours en contact avec une surface fonctionnelle d'appui des languettes, qui est alors supérieure, sous l'effet de la gravité G qui s'exerce sur la roue dentée (comme illustré à titre indicatif à la figure 1) ou sur un chariot motorisé embarquant la roue dentée en particulier un chariot motorisé d'un AGV, quel que soit le sens de déplacement du chariot motorisé à la montée ou à la descente, suivant le sens de rotation de la roue dentée RD, et toujours par appui d'un seulement des deux flancs de la deuxième dent D2.

En fonctionnement, les flancs opposés Fo des deuxièmes dents D2 situés, par rapport au sommet S de la dent, opposés à ces flancs utiles Fu, n'entrent pas en contact avec les languettes 3. Les premières dents D1 de la crémaillère sont avantageusement dépourvues de surface fonctionnelle d'appui, inférieure, configurée pour exercer un tel contact.

Bien que les flancs opposés Fo aux flancs utiles Fu de la roue dentée n'entrent jamais en contact avec la crémaillère lors du fonctionnement, sous l'effet la gravité, chaque deuxième dent de la roue dentée peut présenter deux profils de denture par dent, et typiquement selon un profil en développante de cercle.

Une telle conception permet de monter la roue dentée suivant les deux sens possibles en assurant toujours un engrènement avec la denture de ladite au moins une crémaillère, évitant les erreurs de montage du véhicule, et par comparaison au cas où la roue dentée ne présenterait qu'un seul profil par dent pour engrener avec la crémaillère.

Ainsi, de préférence, et telles qu'illustrées à la figure 1, les languettes pliées 3 sont inclinées dans le même sens par rapport à la direction longitudinale de la poutre 2.

De manière générale, de préférence, les languettes 3 définissent des surfaces dorsales en regard des ouvertures OV, et des surfaces fonctionnelles d'appui SAP, opposées aux surfaces dorsales, configurées pour engager de préférence par roulement avec les deuxièmes dents D2 de la roue dentée RD pour permettre un effort de poussée de la roue dentée RD sur la crémaillère dans un premier sens d'avancement S1 orientée longitudinalement à l'organe longiligne OL.

De manière avantageuse, et tel que notamment illustré aux différents modes de réalisation, les dents de ladite au moins une crémaillère sont de préférence dépourvues de surfaces fonctionnelles d'appui configurées pour permettre un effort de poussée de la roue dentée RD sur ladite au moins une crémaillère suivant un second sens d'avancement S2, opposé au premier sens d'avancement S1.

De manière générale, le profilé de la poutre 2 comprend des lignes de pli longitudinales PL1 à PL16 s'étendant parallèlement entre elles le long de l'organe longiligne OL. Les lignes de pli longitudinales PL1 à PL16 définissent les angles de la section du profilé.

De manière générale, et tel qu'illustré à la figure 2a, le profilé de section tubulaire peut être fermé. Dans un tel cas les languettes 3 peuvent être typiquement pliées vers l'extérieur, du côté opposé au creux du profilé.

La présente divulgation n'exclut pas que les languettes 3 soient pliées vers l'intérieur du creux d'un profilé de section semi-tubulaire, lorsque le profilé autorise un logement de la roue dentée dans le creux du profilé.

De manière générale, les languettes 3 sont attenantes à la paroi P_{OV} du profilé présentant lesdites ouvertures Ov, et qui s'étend typiquement le long de l'organe longiligne. La paroi P_{OV} peut être typiquement une paroi plane lorsque l'organe longiligne est rectiligne, qui s'étend selon les directions YZ en particulier à la figure 2, lorsque la direction Z s'étend parallèlement à l'axe longitudinal de l'organe longiligne et donc aux lignes de pli PL1 à PL16 longitudinales.

De manière générale, les languettes sont attenantes au profilé, au niveau des bords supérieurs de l'ouverture, par des lignes de pli transversales PLD1 orientées sensiblement transversalement aux lignes de pli longitudinales, PL1 à PL16, à savoir suivant la direction Y notamment à la figure 2a.

Les lignes de pli transversales PLD1 sont parallèles entre elles et sont typiquement réparties suivant la longueur dudit organe longiligne OL, et suivant un espacement correspondant au pas de denture « p » entre deux premières dents D1 successives.

De manière générale, les languettes 3 présentent chacune au moins une partie principale 30 s'étendant chacune suivant une direction D3, depuis une extrémité proximale Ep3 d'une des lignes de pli transversales PLD1 jusqu'à une extrémité distale Ed3. L'extrémité distale Ed3 est libre et telle qu'illustrée à la figure 2c ou à la figure 2d. La direction D3 est sensiblement perpendiculaire à la direction transversale de la ligne de pli transversale PLD1. La portion principale 20 s'étend encore, suivant la direction transversale, suivant une dimension qui correspond à la ligne de pli transversale.

Cette portion principale 30 définit la surface fonctionnelle d'appui SAP, supérieure, de la première dent D1 configurée pour engager avec les deuxièmes dents D2 de la roue dentée. L'engrènement entre la surface fonctionnelle d'appui SAP et les deuxièmes dents D2 de la roue dentée est de préférence un engrènement par roulement entre un profil selon une développante de cercle de la denture de la roue dentée et la surface fonctionnelle d'appui SAP de la languette 3.

La dimension en largeur de la surface fonctionnelle d'appui SAP peut être typiquement, suivant la direction transversale Y, supérieure ou égale à la dimension de la denture de ladite au moins une crémaillère suivant cette direction transversale Y.

De manière générale, ladite poutre 3 peut être verticale, ou à tout le moins inclinée par rapport à l'horizontale et être agencée dans un sens de sorte que les languettes 3 sont orientées dans le sens descendant de la poutre, depuis ladite extrémité proximale Ep3 jusqu'à l'extrémité distale Ed3. La surface fonctionnelle d'appui SAP est alors disposée supérieure à ladite languette. La ligne de pli transversale PLD1 s'étend alors sensiblement le long du bord supérieur de l'ouverture OV d'où vient la portion principale 30 de la languette 3. La gravité exercée sur la roue dentée RD (ou sur le chariot motorisé embarquant la roue dentée RD) maintient au moins l'une des deuxièmes dents D2 de la roue dentée RD contre la surface fonctionnelle d'appui SAP d'une des languettes 3 des premières dents D1 de l'organe longiligne OG, et quel que soit le sens de rotation de la roue dentée, que le chariot motorisé se déplace à la montée ou à la descente le long de l'organe longiligne OL.

L'angle S3 entre la direction D3 de la portion principale 30 de la languette 3, et la direction longitudinale de la poutre est inférieur à 90°, typiquement compris entre 50 et 80°, voire entre 65° et 75° typiquement de 70° et de sorte que l'angle de pression α, complémentaire à l'angle S3, est typiquement compris entre 10° et 40°, voire entre 15° et 25°, et est par exemple typiquement de 20°.

La figure 1 donne un mode de réalisation pour lequel chaque languette 3 formant une première dent D1 est attenante au profilé de poutre, uniquement via la ligne de pli transversale PLD1. La figure 1b est une vue schématique de la découpe en U dans la paroi P_{OV} du profilé portant les ouvertures, permettant l'obtention d'une languette 3, la découpe comprenant en U une ligne de coupe CT, inférieure, et deux lignes de coupe CT, latérales, permettant lors de l'emboutissage, la formation de la languette par la ligne de pli transversale PLD1, reliant les deux extrémités du U.

Un tel mode de réalisation présente toutefois des limitations en termes de charge transmise aux languettes 3, et en particulier à la fatigue.

A l'usage, les passages répétés de la roue dentée RD en appui sur les surfaces fonctionnelles d'appui SAP et les charges ainsi appliquées aux languettes 3 ont tendance à déplier les languettes, qui se déformeront avec le temps vers les ouvertures OV, avec une augmentation non souhaitée de l'angle de pression α.

Les modes de réalisations illustrés des figures 2 à 4 permettent d'améliorer sensiblement la situation et offrent de meilleures performances en termes de résistance à la charge et de résistance à la fatigue.

A cet effet, la languette 3 comprend outre ladite portion principale 30 définissant la surface fonctionnelle d'appui SAP, au moins une portion de soutien, prolongeant latéralement la portion principale 30 d'un côté de la portion principale, ou encore de préférence deux portions de soutien 31, 32 prolongeant latéralement la portion principale 30 respectivement des deux côtés de la portion principale et 30, et comme illustré à la figure 2b ou encore à la figure 4, à titre d'exemple.

La portion de soutien, ou chacune des deux portions de soutien 31,32 s'étend en saillie de la portion principale 30 de la languette 3, du côté opposé à la surface fonctionnelle d'appui SAP pour constituer un moyen de renfort entre la portion principale 30 et le profilé.

Un tel moyen de renfort s'oppose à un fléchissement de la languette 3 lorsque la surface fonctionnelle d'appui SAP, supérieure, subit un effort transmis par les deuxièmes dents D2 de la roue dentée RD. Aux figures on remarque que le profil de la languette (comprenant la portion principale 30 et les deux portions de soutien 31, 32) forme une arche lorsque vue suivant la direction d3.

Selon un mode de réalisation, illustré à titre indicatif aux figures 2, 2a, 2b, 2c, la portion de soutien, ou tout ou partie des portions de soutien 31, 32 relie la portion principale 30 de la languette 3 à la paroi P_{OV} du profilé portant les ouvertures OV qui est une paroi plane.

De manière générale et comme illustré à titre indicatif à la figure 2b, la portion principale 30, peut être prolongée latéralement par :
- une première portion de soutien 31 de la languette, reliant un premier bord latéral à la portion principale 30 à la paroi P_{OV},
- une deuxième portion de soutien 32 de la languette, reliant un deuxième bord latéral à la paroi P_{OV}.

La dimension séparant la première portion de soutien 31 et la deuxième portion de soutien 32, délimitant la dimension de la portion principale 30 de la languette 3 suivant cette direction transversale peut être typiquement comprise entre 10 mm et 100 mm.

De manière générale, la portion principale s'étend via la ligne de pli transversale PLD1 qui définit le bord supérieur de l'ouverture OV, alors que la première portion de soutien 31 s'étend via une première ligne de pli latérale PLL1, qui définit un premier bord latéral de l'ouverture Ov, et que la deuxième portion de soutien s'étend via une deuxième ligne de pli latérale PLL2 qui définit un deuxième bord latéral de l'ouverture Ov.

La figure 2d est une vue schématique de la découpe dans la paroi du profilé portant les ouvertures, permettant l'obtention d'une languette, la découpe consistant en une ligne de coupe CT, inférieure, permettant lors de l'emboutissage, la formation de la languette par une ligne de pli transversale PLD1 et deux lignes de plis latérales PLL1, PLL2, reliant respectivement une extrémité de la ligne de pli transversale PLD1 à la ligne de coupe CT, inférieure.

Selon un mode de réalisation illustré notamment à la figure 2b, le bord supérieur de l'ouverture OV formé par la ligne de pli transversale, le premier bord latéral de l'ouverture formé par la première ligne de pli latérale PLL1et le deuxième bord latéral de l'ouverture formé par le deuxième ligne de pli latérale PLL2 , ainsi que le bord inférieur sont contenus dans le plan de la paroi P_{OV} qui est une paroi plane P89 qui peut être une paroi plane P 89 délimitée latéralement par les lignes de plis PL8 et PL9 selon le mode de réalisation illustré.

Selon un autre mode de réalisation, visible à la figure 4, la paroi P_{OV} du profilé portant les ouvertures OV est contenue seulement partiellement dans la paroi plane P89, délimitée entre le pli longitudinal référencé PL8 et le pli longitudinal référencé PL9 ) la figure 2b.

La paroi P_{OV} du profilé portant les ouvertures OV se prolonge ainsi, de part et d'autre de la portion principale 30 des languettes 3, par deux parois latérales P78, P910 s'étendant en saillie de la paroi plane P89, du même côté que les languettes 3, les deux parois latérales P78, P910 jouxtant les languettes 3.

La paroi latérale P78 s'étend en saillie de la paroi plane P89 via le pli longitudinal référencé PL8 et la paroi latérale P910 s'étend en saille de la paroi plane P89 via le pli longitudinal référencé PL9. A la figure 2b, et de manière générale les deux parois latérales P78 et P910 sont planes, parallèles entre elles, et s'étendent sensiblement perpendiculairement à la paroi plane P79. Selon le mode de réalisation de la figure 4, la ligne de coupe CT inférieure s'étend sur toute la dimension transversale de la paroi 79 s'étendant selon la direction Y, en se prolongeant dans les deux parois latérales P78, P910.

Dans un tel mode de réalisation selon la figure 4, les deux portions de soutien 31, 32 relient respectivement la portion principale 30 aux dites deux parois latérales P78, P910. Contrairement au mode de réalisation de la figure 2, un tel mode de réalisation selon la figure 4 implique une ouverture OV dans la paroi P_{OV} qui s'étend non seulement dans la paroi plane P89, mais qui se prolonge au moins partiellement dans les deux parois latérales P78, P910. Le bord supérieur de l'ouverture OV qui s'étend dans le paroi plane P89 et les bords latéraux de l'ouverture, qui s'étendent respectivement dans les deux parois latérales P78 et P910, typiquement perpendiculaire à la paroi plane P89, ne sont donc pas contenus dans un même plan.

De manière générale, le profilé de poutre peut présenter d'autres fonctions et en particulier :
- au moins une série d'ouvertures de fixation OF, réparties suivant la longueur du montant, et permettant la fixation de la poutre à d'autres composants du rack de stockage, et/ou
- au moins une paroi de guidage PG, typiquement parallèle à la paroi portant les languettes, s'étendant suivant la longueur du profilé, configurée pour coopérer avec un organe de guidage OG tel qu'un galet, ou un patin, couplé à un support de la roue dentée.

Selon un mode de réalisation, la paroi de guidage est matérialisée par un flanc d'une rainure formée par le profilé, s'étendant suivant la longueur de la poutre. A la figure 2a une première rainure est matérialisée par trois parois planes délimitées entre les plis longitudinaux référencés PL11, PL12, PL13, PL14. La paroi plane entre les plis longitudinaux PL12, PL13 forme le fond de la rainure, et les deux parois opposées délimitent respectivement entre les plis longitudinal PL11, PL12, d'une part, et PL13, PL14, d'autre part, les deux flancs de la rainure. La paroi de guidage PG est délimitée entre les plis PL11 PL12.

Une deuxième rainure est matérialisée par trois parois planes délimitées entre les plis longitudinaux référencés PL3, PL4, PL5, PL6. La paroi plane entre les plis longitudinaux PL4, PL5 forme le fond de la rainure, et les deux parois opposées délimitées entre les plis longitudinal PL3, PL4, d'une part, et PL5, PL6, d'autre part, les deux flancs de la rainure. La paroi de guidage PG est délimitée entre les plis PL5 PL6.

Selon un mode de réalisation illustré à la figure 2a, le profilé peut avantageusement présenter :
- deux séries d'ouvertures de fixation OF, droite et gauche, diamétralement opposées au corps du profilé, et/ou,
- deux parois de guidage PG, diamétralement opposées.

Le profilé peut présenter un plan de symétrie. Les deux séries d'ouvertures de fixation OF sont symétriques l'une par rapport à l'autre par rapport au plan de symétrie. Les deux parois de guidage PG peuvent être respectivement symétriques, par rapport à ce plan de symétrie du profilé. Le plan de symétrie coupe les languettes 3 de la crémaillère en leur milieu.

La présente divulgation concerne encore, selon un autre aspect, un rack de stockage RK comprenant une structure verticale comprenant plusieurs montants M1, M2, M3, M4 s'étendant verticalement, parallèlement entre eux, et maintenus entre eux par un système d'entretoisement. Le système d'entretoisement peut comprendre des traverses de liaison entre les montants, des contreventements, ou similaire.

Les figures 5 et 6 illustrent une colonne du rack de stockage qui comprend plusieurs alvéoles, réparties suivant la hauteur, configurées pour la superposition de plusieurs réceptacles, tels que des bacs, dans la colonne. La structure verticale comprend quatre montants M1, M2, M3, M4 qui sont des organes longilignes selon la présente divulgation.

De manière générale, selon la présente divulgation, les montants sont formés en tout ou partie par des organes longilignes selon la présente divulgation.

L'organe longiligne peut être avantageusement formé par le profilé métallique formant la poutre de section tubulaire ou semi tubulaire assurant la résistance structurelle du montant qui est un composant d'un seul tenant, obtenu typiquement par les techniques de profilage et de découpe et emboutissage, et comme illustré aux figures.

La présente divulgation n'exclut pas une fabrication des montants en plusieurs parties, en particulier en plusieurs profilés, et selon un exemple non illustré.

Ainsi, et selon un deuxième mode de réalisation, l'organe longiligne est le profilé métallique qui est une feuille métallique telle qu'une lame dans laquelle sont formées les languettes de ladite au moins une crémaillère. Il s'agit alors d'un composant non structurel par comparaison à une poutre de section tubulaire ou de section semi-tubulaire. Un tel organe longiligne peut être directement obtenu par découpe et emboutissage pour la réalisation des languettes, de préférence sans nécessiter d'opération de profilage.

Ainsi la présente divulgation est encore relative, selon un deuxième mode de réalisation, à un assemblage de montant comprenant :
- un organe longiligne selon la présente divulgation, dans lequel le profilé est la feuille métallique portant les languettes de ladite au moins une crémaillère,
- un second profilé de montant, structurel typiquement tubulaire ou semi tubulaire.

La feuille métallique portant la crémaillère est fixée longitudinalement au second profilé structurel de montant notamment par toutes techniques connues telles que soudure, sertissage, rivets. Selon cette variante, le profilé est un profilé sensiblement plat.

La présente divulgation est ainsi encore relative à un rack de stockage comprenant une structure verticale comprenant plusieurs montants M1, M2, M3, M4 s'étendant verticalement, parallèlement entre eux, et maintenus entre eux par un système d'entretoisement, et dans lequel les montants sont formés en tout ou partie par des assemblages de montant selon la présente divulgation.

Ainsi de manière générale, le rack de stockage est configuré pour le soutien d'une pluralité de réceptacles RC superposés en hauteur.

A cet effet, ledit rack de stockage comprend typiquement une pluralité de couples d'interfaces mécaniques qui sont fixées aux montant M1, M2, M3, M4, réparties suivant la hauteur du rack pour former plusieurs alvéoles, chaque couple d'interfaces comprenant :
- une première interface ITA fixée à au moins deux montants M1, M2 de la structure verticale, en porte-à-faux des deux montants
- une deuxième interface ITB fixée à au moins deux autres montants M3, M4 de la structure verticale, en porte-à-faux des deux autres montants.

De manière générale, et tel que visibles des figures 5 et 6, des portions de soutien de la première interface ITA et de la deuxième interface ITB sont orientées l'une vers l'autre en porte-à-faux des montants, configurées pour assurer le soutien d'un réceptacle RC soutenu par les deux portions de soutien des deux interfaces des deux côtés du réceptacle.

De manière générale, chaque interface mécanique comprend les trois portions successives suivantes :
- une portion supérieure de fixation, verticale, fixée aux montants, aux ouvertures de fixations, par des languettes de fixation, ou encore des rivets,
- une portion de centrage
- la portion de soutien.

La portion de centrage présente une inclinaison supérieure à la portion de soutien et est configurée pour assurer le centrage de la charge, selon la direction transversale Y, vers un plan vertical médian entre les deux interfaces mécaniques ITA et ITB. Les trois portions de l'interface mécanique sont typiquement obtenues par conformage d'une tôle par une première ligne de pli, s'étendant suivant la direction X, délimitant la portion de fixation et la portion de centrage, et une deuxième ligne de pli parallèle délimitant la portion de centrage et la portion de soutien.

La présente divulgation est encore relative à un système de transport et de stockage comprenant un rack de stockage selon la présente divulgation et au moins un véhicule V, typiquement un AGV, comportant un châssis, embarquant des moyens de grimpe.

Les moyens de grimpe comprennent une ou plusieurs roues dentées RD motorisées configurées pour assurer le déplacement du véhicule le long de l'un au moins des montants M1, M2, M3, M4 de la structure verticale du rack de stockage, à la montée ou à la descente.

La roue dentée (ou chaque roue dentée RD) transforme un mouvement de rotation de la ou des roues dentées RD en un mouvement du véhicule le long dudit ou des organes longilignes OL par l'engrènement des premières dents D1 de la crémaillère, et des deuxièmes dents D2 de la roue dentée RD, les premières dents étant avantageusement constituées par les languettes 3 d'un seul tenant avec le corps du profilé de poutre 2.

Le véhicule V peut comprendre un système de chargement/déchargement déployable configuré pour :
- charger un réceptacle depuis une première position escamotée au-dessus du châssis jusqu'à une deuxième position déployée pour laquelle le réceptacle est en appui simultané sur la première interface et la deuxième interface, ou
- extraire un réceptacle depuis la deuxième position en appui sur la première interface et la deuxième interface d'un couple d'interfaces et le charger dans la première position escamotée.

Un tel système de chargement/déchargement n'est pas décrit en détail car connu en soi de la personne du métier, et tel que par exemple du document WO 2019/072432.

De manière générale, le véhicule peut comprendre un mécanisme de débrayage configuré pour passer la ou les roues dentées RD des moyens de grimpe du véhicule d'une position embrayée pour laquelle les premières dents D1 de l'organe longiligne OL solidaire du montant du rack, et les deuxièmes dents D2 de la roue dentée RD sont en prise, jusqu'à une position débrayée pour laquelle la roue dentée RD ou les roues dentées RD portant les deuxièmes dents D2, d'une part, et les organes longilignes OL portant les premières dents D1, d'autre part, sont écartés avec échappement entre les premières dents D1 et les deuxièmes dents D2.

Le véhicule V peut comporter des moyens de roulage Ro sur une surface horizontale, autorisant le déplacement du véhicule V sur la surface horizontale dans ladite position débrayée, une fois le véhicule séparé de la structure verticale du rack de stockage.

La surface horizontale peut être le sol sur lequel appuie la base des montants du rack de stockage, ou encore peut être un plafond en hauteur par rapport à la structure du rack.

Les moyens de roulage peuvent coopérer avec des rails de guidage, suivant une direction de la surface horizontale, ou suivant deux directions distinctes de la surface horizontale, ou encore les moyens de roulage peuvent être configurés pour opérer en champ libre sur la surface horizontale, c'est-à-dire dépourvue de rails de guidage, et comprendre des roulettes motorisées.

De préférence, le véhicule comprend des moyens pour changer la direction de déplacement du véhicule sur la surface horizontale. Ainsi le véhicule est de préférence configuré pour se déplacer suivant les deux dimensions de la surface horizontale, dans la position débrayée du mécanisme de débrayage, puis après embrayage de la roue dentée et la crémaillère pour se déplacer verticalement le long de la structure du rack par rotation motorisée de la roue dentée qui coopère avec la denture formée par les languettes 3 de la crémaillère pour se déplacer à la montée ou à la descente.

Le véhicule V peut être équipé d'un système de guidage comportant un organe de guidage OG, tel qu'un galet d'appui, ou un patin de glissement, coopérant avec ladite paroi de guidage PG dudit profilé dudit organe longiligne.

Le système de guidage est configuré de sorte que la coopération de l'organe de guidage OG contre la paroi de guidage PG assure un maintien en prise entre les premières dents D1 de la crémaillère et les deuxièmes dents D2 de la roue dentée RD.

De manière générale, et telle qu'illustrée à la figure 2d, la roue dentée RD ou chaque roue dentée peut être articulée suivant l'axe de rotation A_{R} sur un support S du véhicule V. Lors du guidage, l'organe de guidage OG en particulier le galet peut être articulé suivant un axe de rotation parallèle à l'axe de rotation de la roue dentée.

La paroi de guidage PG est typiquement parallèle à la paroi P_{OV} portant les ouvertures lorsque la paroi P_{OV} est plane, voire parallèle à une partie centrale de la paroi (i.e la paroi plane P89) lorsque la paroi P_{OV} se prolonge latéralement en saillie par les parois latérales P78, P910.

La présente divulgation concerne encore un procédé de fabrication d'un organe longiligne selon la présente divulgation, d'un assemblage de montant selon la présente divulgation, d'un rack de stockage selon la présente divulgation, ou d'un système de transport et de stockage, dans lequel on obtient le profilé formant l'organe longiligne OL, éventuellement lorsque de section tubulaire ou semi tubulaire par les techniques de profilage, et on obtient lesdites languettes pliées 3 venant de la matière des ouvertures OV dans la paroi P_{OV} du profilé par les techniques de découpe et emboutissage.

### Liste des signes de référence

1. Système roue dentée et crémaillère,
2. Poutre (Organe longiligne),
3. Languettes,
30. Portion principale,
31,32. Portions de soutien
SAP. Surface d'appui
OL. Organe longiligne,
D1. Première dents (organe longiligne),
RD. Roue dentée,
D2. Deuxièmes dents (roue dentée)
OV. Ouvertures
P_{OV}. Paroi portant les ouvertures,
P78, P910. Parois prolongeant la paroi portant les ouvertures
PL1 à PL16. Lignes de pli longitudinales,
PLD1. Lignes de pli transversales,
SAP. Surfaces fonctionnelles d'appui (premières dents) ;
OG. Organe de guidage,
S. Support (portant la roue dentée et l'organe de guidage),
PG. Paroi de guidage,
RK. Rack de stockage,
RC. Réceptacles,
M1, M3, M3, M4. Montants,
ITA, ITB. Première et deuxième interface mécanique.

## Revendications

1. Rack de stockage comprenant une structure verticale comprenant plusieurs montants (M1, M2, M3, M4) s'étendant verticalement, parallèlement entre eux, et maintenus entre eux par un système d'entretoisement, et dans lequel les montants sont formés en tout ou partie par des organes longilignes, chaque organe longiligne présentant au moins une crémaillère destinée à engrener avec une roue dentée (RD) pivotante autour d'un axe de rotation (A_{R}) de la roue dentée, ladite au moins une crémaillère comprenant des premières dents (D1) réparties suivant une direction en longueur dudit organe longiligne, destinées à engrener avec des deuxièmes dents (D2) sur un diamètre de la roue dentée
**caractérisé en ce que** l'organe longiligne est formé par un profilé métallique et dans lequel les premières dents (D1) sont formées par des languettes (3) pliées qui sont obtenues par pliage de la matière du profilé métallique venant d'une série d'ouvertures (OV) dans une paroi (P_{OV}) du profilé réparties suivant la direction en longueur dudit organe longiligne (OL), lesdites languettes en saillie de ladite paroi, d'un côté de la paroi.

2. Rack de stockage selon la revendication 1; dans lequel ledit organe longiligne est formé par un profilé métallique formant une poutre de section tubulaire ou semi tubulaire, assurant la résistance structurelle du montant qui est un composant d'un seul tenant.

3. Rack de stockage selon la revendication 1, dans lequel les montants sont formés en tout ou partie par des assemblages de montant, chaque assemblage de montant comprenant :
- ledit organe longiligne (OL) formé par le profilé métallique qui est une feuille métallique telle qu'une lame, dans laquelle sont formées lesdites languettes (3) de la crémaillère
- un second profilé de montant, structurel, tubulaire ou semi-tubulaire,
et dans lequel la feuille métallique de l'organe longiligne portant ladite au moins une crémaillère est fixée longitudinalement au second profilé structurel de montant.

4. Rack de stockage selon l'une des revendications 1 à 3, dans lequel les languettes pliées (3) sont inclinées dans le même sens par rapport à la direction longitudinale de l'organe longiligne (OL), les languettes (3) définissant des surfaces dorsales en regard des ouvertures (OV), et des surfaces fonctionnelles d'appui (SAP), opposées aux surfaces dorsales, configurées pour engager avec les deuxièmes dents (D2) de la roue dentée (RD) pour permettre un effort de poussée de la roue dentée sur la dite au moins une crémaillère dans un premier sens d'avancement (S1) le long de la crémaillère, et dans lequel les dents de ladite au moins une crémaillère sont dépourvues de surfaces fonctionnelles d'appui configurées pour permettre un effort de poussé de la roue dentée (RD) sur ladite au moins une crémaillère suivant une second sens d'avancement (S2), opposé au premier sens d'avancement (S1).

5. Rack de stockage selon l'une des revendications 1 à 4 dans lequel les languettes sont attenantes à la paroi du profilé présentant lesdites ouvertures, lesdites languettes attenantes par des lignes de pli transversales orientées sensiblement transversalement à la direction longitudinale de l'organe longiligne (OG), les lignes de pli transversales (PLD1) parallèles entre elles, réparties suivant la longueur dudit organe longiligne (OL) et dans lequel les languettes (3) présentent au moins une partie principale (30) s'étendent chacune suivant une direction D3, perpendiculaire à la ligne de pli transversale (PLD1), depuis une extrémité proximale (Ep3) de la ligne de pli transversale (PLD1) jusqu'à une extrémité distale (Ed3) en définissant une surface fonctionnelle d'appui (SAP), configurée pour engager avec les deuxièmes dents (D2) de la roue dentée.

6. Rack de stockage selon les revendications 4 et 5, dans lequel l'organe longiligne est agencé de sorte que les languettes (3) de ladite au moins une crémaillère sont orientées dans le sens descendant de l'organe longiligne, depuis ladite extrémité proximale (Ep3) jusqu'à l'extrémité distale (Ed3), libre, lesdites surfaces fonctionnelles d'appui (SAP) disposées supérieures aux languettes, configurées de sorte que la gravité exercée sur la roue dentée (RD) maintient au moins l'une des deuxièmes dents (D2) de la roue dentée (RD) contre la surface fonctionnelle d'appui (SAP) d'une des languettes (3) des premières dents (D1) de l'organe longiligne (OG).

7. Rack de stockage selon la revendication 6 dans lequel l'angle S3 entre la direction D3 de la portion principale (30) de la languette (3), et la direction longitudinale de l'organe longiligne est inférieur à 90°, de préférence compris entre 50° et 80°, typiquement de 70° et de sorte que l'angle de pression α, complémentaire est typiquement compris entre 10° et 40°, par exemple de 20°.

8. Rack de stockage selon l'une des revendications 5 à 7, dans lequel la languette (3) comprend outre ladite portion principale (30) définissant la surface fonctionnelle d'appui (SAP), au moins une portion de soutien, prolongeant latéralement la portion principale (30) d'un côté de la portion principale, ou encore deux portions de soutien (31, 32) prolongeant latéralement la portion principale (30) respectivement (30) des deux côtés de la portion principale (30)
dans lequel la portion de soutien, ou chacune des deux portions de soutien (31,32) s'étend en saillie de la portion principale (30) de la languette (30), du côté opposé à la surface fonctionnelle d'appui (SAP) pour constituer un moyen de renfort entre la portion principale (30) et le profilé, le moyen de renfort s'opposant à un fléchissement de la languette (3) lorsque la surface fonctionnelle d'appui (SAP), supérieure, subit un effort transmis par les deuxièmes dents (D2) de la roue dentée.

9. Rack de stockage selon la revendication 8, dans lequel la portion de soutien, ou tout ou partie des portions de soutien (31, 32) relie la portion principale (30) de la languette (3) à la paroi (P_{OV}) du profilé portant les ouvertures (OV) qui est une paroi plane (P89).

10. Rack de stockage selon la revendication 8, dans lequel la paroi (P_{OV}) du profilé portant les ouvertures (OV) est contenue partiellement dans un plan en définissant une paroi plane (P89), la paroi portant les ouvertures étant prolongée de part et d'autre des languettes (3), par deux paroi latérales (P78, P910) s'étendant en saillie de la paroi plane (P89), saillantes du même côté que les languettes (3), les deux parois latérales (P78, P910) jouxtant les languettes (3),
et dans lequel les deux portions de soutien (31, 32) relient respectivement la portion principale (30) aux dites deux parois latérales (P78, P910).

11. Système de transport et de stockage comprenant un rack de stockage selon l'une des revendications 1 à 10 et au moins un véhicule (V) comportant un châssis, embarquant des moyens de grimpe, comprenant une ou plusieurs roues dentées (RD) motorisées configurées pour assurer le déplacement du véhicule le long des montants (M1, M2, M3, M4) de la structure verticale du rack de stockage, à la montée ou à la descente en transformant un mouvement de rotation de la ou des roues dentée (RD) en un mouvement du véhicule le long dudit ou des organes longilignes (OL) par l'engrènement des premières dents (D1) de ladite au moins une crémaillère et des deuxièmes dents (D2) de la roue dentée (RD).

12. Système de transport et de stockage selon la revendication 11, dans lequel le rack de stockage est configuré pour le soutien d'une pluralité de réceptacle (RC), ledit rack de stockage comprenant une pluralité de couple d'interfaces mécaniques qui sont fixées aux montant (M1, M2, M3, M4), réparties suivant la hauteur du rack pour former plusieurs alvéoles de stockage, chaque couple d'interfaces comprenant :
-- une première interface (ITA) fixée à au moins deux montants (M1, M2) de la structure verticale, en porte-à-faux des deux montants
-- une deuxième interface (ITB) fixée à au moins deux autres montants (M3, M4) de la structure verticale, en porte-à-faux des deux autres montants
et dans lequel des portions de soutien de la première interface (ITA) et de la deuxième interface (ITB) sont orientées l'une vers l'autre en porte à faux des montants, configurées pour assurer le soutien d'un réceptacle (RC) soutenu par les deux portions de soutien des deux interfaces des deux côtés du réceptacle, et dans lequel le véhicule (V) comprend un système de chargement/déchargement déployable configuré pour :
- charger un réceptacle depuis une première position escamotée au-dessus du châssis jusqu'à une deuxième position déployée pour laquelle le réceptacle est en appui simultané sur la première interface et la deuxième interface, ou
- extraire un réceptacle depuis la deuxième position en appui sur la première interface et la deuxième interface d'un couple d'interfaces et le charger dans la première position escamotée.

13. Système de transport et de stockage selon la revendication 11 ou 12, dans lequel le véhicule comprend un mécanisme de débrayage configuré pour passer la ou les roues dentées (RD) des moyens de grimpe du véhicule d'une position embrayée pour laquelle les premières dents (D1) de l'organe longiligne (OL) et les deuxième dents (D2) de la roue dentée (RD) sont en prise, jusqu'à une position débrayée pour laquelle la roue dentée (RD) ou les roues dentées (RD) portant les deuxièmes dents (D2), d'une part, et les organes longilignes (OL) portant les premières dents (D1), d'autre part, sont écartés avec échappement entre les premières dents (D1) et les deuxièmes dents (D2), et dans lequel le véhicule (V) comporte des moyens de roulage (Ro) sur une surface horizontale, autorisant le déplacement du véhicule (V) sur la surface horizontale dans ladite position débrayée, une fois le véhicule séparé de la structure verticale du rack de stockage.

14. Système de transport et de stockage selon l'une des revendications 11 à 13 dans lequel dans lequel la roue dentée (RD) est articulée suivant l'axe de rotation (A_{R}) sur un support (S) du véhicule (V),
et dans lequel le véhicule (V) est équipé d'un système de guidage comportant un organe de guidage (OG), tel qu'un galet d'appui, ou un patin de glissement, coopérant avec une paroi de guidage (PG) dudit profilé dudit organe longiligne,
et dans lequel le système de guidage est configuré de sorte que la coopération de l'organe de guidage (OG) contre la paroi de guidage (PG) assure un maintien en prise entre les première dents (D1) de ladite au moins une crémaillère et les deuxième dents (D2) de la roue dentée (RD).

15. Procédé de fabrication d'un rack de stockage selon l'une des revendications 1 à 10, ou d'un système selon l'une des revendication 11 à 14, dans lequel on obtient le profilé formant l'organe longiligne (OL), éventuellement lorsque de section tubulaire ou semi tubulaire par les techniques de profilage, et on obtient lesdites languettes pliées (3) venant de la matière des ouvertures (OV) dans la paroi (P_{OV}) du profilé par les techniques de découpe et emboutissage.

## Patentansprüche

1. Lagergestell, umfassend eine vertikale Struktur, welche mehrere Ständer (M1, M2, M3, M4) umfasst, welche sich vertikal parallel zueinander erstrecken und durch ein Verstrebungssystem miteinander verbunden sind, wobei die Ständer ganz oder teilweise durch längliche Organe gebildet sind, wobei jedes längliche Organ wenigstens eine Zahnstange aufweist, welche dazu bestimmt ist, mit einem Zahnrad (RD) zu kämmen, welches um eine Drehachse (Ar) des Zahnrads schwenkbar ist, wobei die wenigstens eine Zahnstange erste Zähne (D1) umfasst, welche einer Längsrichtung des länglichen Organs folgend verteilt sind und dazu bestimmt sind, mit zweiten Zähnen (D2) auf einem Durchmesser des Zahnrads zu kämmen, **dadurch gekennzeichnet, dass** das längliche Organ durch ein Metallprofil gebildet ist und die ersten Zähne (D1) durch gebogene Zungen (3) gebildet sind, welche durch Biegen des Materials des Metallprofils aus einer Reihe von Öffnungen (OV) in einer Wand (Pₒᵥ) des Profils erhalten sind, welche der Längsrichtung des länglichen Organs (OL) folgend verteilt sind, wobei die Zungen von der Wand auf einer Seite der Wand vorstehen.

2. Lagergestell nach Anspruch 1, wobei das längliche Organ durch ein Metallprofil gebildet ist, welches einen Träger mit rohrförmigem oder halbrohrförmigem Querschnitt bildet, welcher die strukturelle Festigkeit des Ständers sicherstellt, welcher ein einstückiges Bauteil ist.

3. Lagergestell nach Anspruch 1, wobei die Ständer ganz oder teilweise durch Ständerbaugruppen gebildet sind, wobei jede Ständerbaugruppe umfasst:
- das längliche Organ (OL), gebildet durch das Metallprofil, welches ein Metallblech wie eine Lamelle ist, in welchem die Zungen (3) der Zahnstange ausgebildet sind,
- ein zweites, strukturelles, rohrförmiges oder halbrohrförmiges Ständerprofil,
und wobei das Metallblech des länglichen Organs, welches die wenigstens eine Zahnstange trägt, in Längsrichtung an dem zweiten strukturellen Ständerprofil befestigt ist.

4. Lagergestell nach einem der Ansprüche 1 bis 3, wobei die gebogenen Zungen (3) in derselben Richtung gegenüber der Längsrichtung des länglichen Organs (OL) geneigt sind, wobei die Zungen (3) Rückflächen gegenüber den Öffnungen (OV) und funktionelle Auflageflächen (SAP) definieren, welche den Rückflächen gegenüberliegen, welche dafür eingerichtet sind, mit den zweiten Zähnen (D2) des Zahnrads (RD) in Eingriff zu kommen, um eine Schubkraft des Zahnrads auf die wenigstens eine Zahnstange in einer ersten Vorschubrichtung (S1) entlang der Zahnstange zu ermöglichen, und wobei die Zähne der wenigstens einen Zahnstange frei von funktionellen Auflageflächen sind, welche dafür eingerichtet sind, eine Schubkraft des Zahnrads (RD) auf die wenigstens eine Zahnstange einer zweiten Vorschubrichtung (S2) folgend zu ermöglichen, welche der ersten Vorschubrichtung (S1) entgegengesetzt ist.

5. Lagergestell nach einem der Ansprüche 1 bis 4, wobei die Zungen an der Wand des Profils angrenzen, welche die Öffnungen aufweist, wobei die Zungen über quer verlaufende Biegelinien angrenzen, welche im Wesentlichen quer zur Längsrichtung des länglichen Organs (OG) ausgerichtet sind, wobei die quer verlaufenden Biegelinien (PLD1) parallel zueinander und entlang der Länge des länglichen Organs (OL) verteilt sind, und wobei die Zungen (3) wenigstens einen Hauptabschnitt (30) aufweisen, welcher sich jeweils einer Richtung D3 senkrecht zur quer verlaufenden Biegelinie (PLD1) folgend erstreckt, von einem proximalen Ende (Ep3) der quer verlaufenden Biegelinie (PLD1) bis zu einem distalen Ende (Ed3), wobei eine funktionelle Auflagefläche (SAP) definiert wird, welche dafür eingerichtet ist, mit den zweiten Zähnen (D2) des Zahnrads in Eingriff zu kommen.

6. Lagergestell nach den Ansprüchen 4 und 5, wobei das längliche Organ so angeordnet ist, dass die Zungen (3) der wenigstens einen Zahnstange in absteigender Richtung des länglichen Organs orientiert sind, von dem proximalen Ende (Ep3) bis zu dem freien distalen Ende (Ed3), wobei die funktionellen Auflageflächen (SAP) oberhalb der Zungen angeordnet sind und so eingerichtet sind, dass die auf das Zahnrad (RD) wirkende Schwerkraft wenigstens einen der zweiten Zähne (D2) des Zahnrads (RD) gegen die funktionelle Auflagefläche (SAP) einer der Zungen (3) der ersten Zähne (D1) des länglichen Organs (OG) hält.

7. Lagergestell nach Anspruch 6, wobei der Winkel S3 zwischen der Richtung D3 des Hauptabschnitts (30) der Zunge (3) und der Längsrichtung des länglichen Organs kleiner als 90° ist, vorzugsweise zwischen 50° und 80° liegt, typischerweise 70° beträgt, und so, dass der komplementäre Schubwinkel α, typischerweise zwischen 10° und 40° liegt, beispielsweise 20° beträgt.

8. Lagergestell nach einem der Ansprüche 5 bis 7, wobei die Zunge (3) neben dem Hauptabschnitt (30), welcher die funktionelle Auflagefläche (SAP) definiert, wenigstens einen Stützabschnitt umfasst, welcher den Hauptabschnitt (30) seitlich auf einer Seite des Hauptabschnitts verlängert, oder auch zwei Stützabschnitte (31, 32), welche den Hauptabschnitt (30) jeweils seitlich auf beiden Seiten des Hauptabschnitts (30) verlängern,
wobei der Stützabschnitt oder jeder der beiden Stützabschnitte (31, 32) sich vom Hauptabschnitt (30) der Zunge (30) auf der der funktionellen Auflagefläche (SAP) gegenüberliegenden Seite vorspringend erstreckt, um ein Verstärkungsmittel zwischen dem Hauptabschnitt (30) und dem Profil zu bilden, wobei das Verstärkungsmittel einem Durchbiegen der Zunge (3) entgegenwirkt, wenn die obere funktionelle Auflagefläche (SAP) einer von den zweiten Zähnen (D2) des Zahnrads übertragenen Kraft ausgesetzt ist.

9. Lagergestell nach Anspruch 8, wobei der Stützabschnitt oder alle oder ein Teil der Stützabschnitte (31, 32) den Hauptabschnitt (30) der Zunge (3) mit der Wand (Pₒᵥ) des Profils verbindet, welche die Öffnungen (OV) trägt und eine ebene Wand (P89) ist.

10. Lagergestell nach Anspruch 8, wobei die Wand (Pₒᵥ) des Profils, welche die Öffnungen (OV) trägt, teilweise in einer Ebene enthalten ist, welche eine ebene Wand (P89) definiert, wobei die die Öffnungen tragende Wand beiderseits der Zungen (3) durch zwei Seitenwände (P78, P910) verlängert ist, welche von der ebenen Wand (P89) vorstehen und auf derselben Seite wie die Zungen (3) vorspringen, wobei die beiden Seitenwände (P78, P910) an die Zungen (3) angrenzen,
und wobei die beiden Stützabschnitte (31, 32) den Hauptabschnitt (30)
jeweils mit den beiden Seitenwänden (P78, P910) verbinden.

11. Transport- und Lagersystem, umfassend ein Lagergestell nach einem der Ansprüche 1 bis 10 und wenigstens ein Fahrzeug (V), welches ein Fahrgestell umfasst, welches Klettermittel an Bord hat, umfassend ein oder mehrere motorisierte Zahnräder (RD), welche dafür eingerichtet sind, die Fortbewegung des Fahrzeugs entlang der Ständer (M1, M2, M3, M4) der vertikalen Struktur des Lagergestells beim Aufstieg oder Abstieg sicherzustellen, indem eine Drehbewegung des oder der Zahnräder (RD) in eine Bewegung des Fahrzeugs entlang des oder der länglichen Organe (OL) umgewandelt wird, durch das Kämmen der ersten Zähne (D1) der wenigstens einen Zahnstange und der zweiten Zähne (D2) des Zahnrads (RD).

12. Transport- und Lagersystem nach Anspruch 11, wobei das Lagergestell für die Aufnahme einer Mehrzahl von Behältern (RC) eingerichtet ist, wobei das Lagergestell eine Mehrzahl von Paaren mechanischer Schnittstellen umfasst, welche an den Ständern (M1, M2, M3, M4) befestigt und über die Höhe des Gestells verteilt sind, um mehrere Lagerfächer zu bilden, wobei jedes Paar von Schnittstellen umfasst:
- eine erste Schnittstelle (ITA), welche an wenigstens zwei Ständern (M1, M2) der vertikalen Struktur befestigt ist und von den beiden Ständern auskragt,
- eine zweite Schnittstelle (ITB), welche an wenigstens zwei weiteren Ständern (M3, M4) der vertikalen Struktur befestigt ist und von den beiden weiteren Ständern auskragt,
und wobei Stützabschnitte der ersten Schnittstelle (ITA) und der zweiten Schnittstelle (ITB) einander zugewandt von den Ständern auskragen und dafür eingerichtet sind, die Aufnahme eines Behälters (RC) sicherzustellen, welcher von den beiden Stützabschnitten der beiden Schnittstellen auf beiden Seiten des Behälters gestützt ist, und wobei das Fahrzeug (V) ein ausfahrbares Be-/Entladesystem umfasst, welches dafür eingerichtet ist:
- einen Behälter von einer ersten eingezogenen Position oberhalb des Fahrgestells in eine zweite ausgefahrene Position zu laden, in welcher der Behälter gleichzeitig auf der ersten Schnittstelle und der zweiten Schnittstelle aufliegt, oder
- einen Behälter aus der zweiten Position, in welcher er auf der ersten Schnittstelle und der zweiten Schnittstelle eines Schnittstellenpaars aufliegt, zu entnehmen und in die erste eingezogene Position zu laden.

13. Transport- und Lagersystem nach Anspruch 11 oder 12, wobei das Fahrzeug einen Ausrückmechanismus umfasst, welcher dafür eingerichtet ist, das oder die Zahnräder (RD) der Klettermittel des Fahrzeugs von einer eingerückten Position, in welcher die ersten Zähne (D1) des länglichen Organs (OL) und die zweiten Zähne (D2) des Zahnrads (RD) im Eingriff sind, in eine ausgerückte Position zu überführen, in welcher das Zahnrad (RD) oder die Zahnräder (RD) mit den zweiten Zähnen (D2) einerseits und die länglichen Organe (OL) mit den ersten Zähnen (D1) andererseits unter Freigabe zwischen den ersten Zähnen (D1) und den zweiten Zähnen (D2) voneinander beabstandet sind, und wobei das Fahrzeug (V) Fahrmittel (Ro) auf einer horizontalen Fläche umfasst, welche die Fortbewegung des Fahrzeugs (V) auf der horizontalen Fläche in der ausgerückten Position ermöglichen, sobald das Fahrzeug von der vertikalen Struktur des Lagergestells getrennt ist.

14. Transport- und Lagersystem nach einem der Ansprüche 11 bis 13, wobei das Zahnrad (RD) um die Drehachse (A_{R}) an einem Träger (S) des Fahrzeugs (V) angelenkt ist,
und wobei das Fahrzeug (V) mit einem Führungssystem ausgestattet ist, welches ein Führungsorgan (OG) umfasst, wie eine Stützrolle oder ein Gleitstück, welches mit einer Führungswand (PG) des Profils des länglichen Organs zusammenwirkt,
und wobei das Führungssystem so eingerichtet ist, dass das Zusammenwirken des Führungsorgans (OG) gegen die Führungswand (PG) einen Eingriff zwischen den ersten Zähnen (D1) der wenigstens einen Zahnstange und den zweiten Zähnen (D2) des Zahnrads (RD) aufrechterhält.

15. Verfahren zur Herstellung eines Lagergestells nach einem der Ansprüche 1 bis 10 oder eines Systems nach einem der Ansprüche 11 bis 14, wobei das Profil, welches das längliche Organ (OL) bildet, gegebenenfalls mit rohrförmigem oder halbrohrförmigem Querschnitt, durch Profilierungstechniken erhalten wird, und die gebogenen Zungen (3) aus dem Material der Öffnungen (OV) in der Wand (Pₒᵥ) des Profils durch Stanz- und Tiefziehtechniken erhalten werden.

## Claims

1. A storage rack comprising a vertical structure comprising several uprights (M1, M2, M3, M4) extending vertically, parallel to each other, and held together by a bracing system, and wherein the uprights are formed in whole or in part by elongate members, wherein each elongate member has at least one toothed bar intended to mesh with a cogwheel (RD) pivoting around a rotation axis (A_{R}) of the cogwheel, said at least one toothed bar comprising first teeth (D1) distributed along a lengthwise direction of said elongate member, intended to mesh with second teeth (D2) over a diameter of the cogwheel
**characterized in that** the elongate member is formed by a metal profile and wherein the first teeth (D1) are formed by folded tabs (3) which are produced by folding the material of the metal profile coming from a series of openings (OV) in a wall (P_{OV}) of the profile distributed along the lengthwise direction of said elongate member (OL), said tabs projecting from said wall, on one side of the wall.

2. A storage rack according to claim 1, wherein said elongate member is formed by a metal profile forming a beam having a tubular or semi-tubular cross-section, conferring the structural resistance on the upright which is a single-piece component.

3. A storage rack according to claim 1, wherein the uprights are formed in whole or in part by upright assemblies, each upright assembly comprising:
- said elongate member (OL) formed by the metal profile which is a metal sheet such as a blade, in which said tabs (3) of the toothed bar are formed
- a second upright profile, structural, tubular or semi-tubular,
and wherein the metal sheet of the elongate member provided with said at least one toothed bar is fastened longitudinally to the second structural upright profile.

4. A storage rack according to one of claims 1 to 3, wherein the folded tabs (3) are inclined in the same direction relative to the longitudinal direction of the elongate member (OL), the tabs (3) defining dorsal surfaces facing the openings (OV), and functional bearing surfaces (SAP), opposite the dorsal surfaces, configured to engage the second teeth (D2) of the cogwheel (RD) to allow a thrust force of the cogwheel on said at least one toothed bar in a first advancement direction (S1) along the toothed bar, and wherein the teeth of said at least one toothed bar are devoid of functional bearing surfaces configured to allow a thrust force of the cogwheel (RD) on said at least one toothed bar in a second advancement direction (S2), opposite the first advancement direction (S1).

5. A storage rack according to one of claims 1 to 4, wherein the tabs are adjacent the wall of the profile having said openings, said tabs being adjacent by transverse fold lines that are oriented substantially transversely to the longitudinal direction of the elongate member (OG), the transverse fold lines (PLD1) being parallel to each other, distributed along the length of said elongate member (OL) and wherein the tabs (3) have at least one main part (30) each extending in a direction D3, perpendicular to the transverse fold line (PLD1), from a proximal end (Ep3) of the transverse fold line (PLD1) to a distal end (Ed3), defining a functional bearing surface (SAP) configured to engage with the second teeth (D2) of the cogwheel.

6. A storage rack according to claims 4 and 5, wherein the elongate member is arranged so that the tabs (3) of said at least one toothed bar are oriented in the downward direction of the elongate member, from said proximal end (Ep3) to the free distal end (Ed3), said functional bearing surfaces (SAP) being arranged above the tabs, configured so that the gravity exerted on the cogwheel (RD) holds at least one of the second teeth (D2) of the cogwheel (RD) against the functional bearing surface (SAP) of one of the tabs (3) of the first teeth (D1) of the elongate member (OG).

7. A storage rack according to claim 6, wherein the angle S3 between the direction D3 of the main portion (30) of the tab (3), and the longitudinal direction of the elongate member is less than 90°, preferably between 50° and 80°, typically 70° and so that the complementary pressure angle α is typically between 10° and 40°, for example 20°.

8. A storage rack according to one of claims 5 to 7, wherein the tab (3) comprises, in addition to said main portion (30) defining the functional bearing surface (SAP), at least one supporting portion, extending the main portion (30) laterally on one side of the main portion, or two supporting portions (31, 32) extending the main portion (30) laterally respectively (30) on both sides of the main portion (30)
wherein the supporting portion, or each of the two supporting portions (31, 32) extend(s) projecting from the main portion (30) of the tab (30), on the side opposite the functional bearing surface (SAP) to constitute a reinforcement means between the main portion (30) and the profile, the reinforcement means opposing the tab (3) bending when the upper functional bearing surface (SAP) undergoes a force transmitted by the second teeth (D2) of the cogwheel.

9. A storage rack according to claim 8, wherein the supporting portion, or all or part of the supporting portions (31, 32) connect(s) the main portion (30) of the tab (3) to the wall (P_{OV}) of the profile provided with the openings (OV) which is a flat wall (P89).

10. A storage rack according to claim 8, wherein the wall (P_{OV}12. of the profile provided with the openings (OV) is partially contained in a plane by defining a flat wall (P89), the wall provided with the openings being extended on either side of the tabs (3), by two side walls (P78, P910) extending in projection from the flat wall (P89), projecting on the same side as the tabs (3), the two side walls (P78, P910) adjoining the tabs (3),
and wherein the two supporting portions (31, 32) respectively connect the main portion (30) to said two side walls (P78, P910).

11. A transport and storage system comprising a storage rack according to one of claims 1 to 10 and at least one vehicle (V) comprising a chassis, incorporating climbing means, comprising one or more motorized cogwheels (RD) configured to perform the movement of the vehicle along the uprights (M1, M2, M3, M4) of the vertical structure of the storage rack, upwards or downwards, by transforming a rotational movement of the cogwheel(s) (RD) into a movement of the vehicle along said elongate member(s) (OL) by the first teeth (D1) of said at least one toothed bar meshing with the second teeth (D2) of the cogwheel (RD).

12. A transport and storage system according to claim 11, wherein the storage rack is configured to support a plurality of receptacles (RC), said storage rack comprising a plurality of pairs of mechanical interfaces which are fastened to the uprights (M1, M2, M3, M4), distributed along the height of the rack to form several storage cells, each pair of interfaces comprising:
-- a first interface (ITA) fastened to at least two uprights (M1, M2) of the vertical structure, cantilevered from the two uprights
-- a second interface (ITB) fastened to at least two other uprights (M3, M4) of the vertical structure, cantilevered from the other two uprights
and wherein supporting portions of the first interface (ITA) and the second interface (ITB) are oriented towards each other in cantilevered manner from the uprights, configured to provide support for a receptacle (RC) supported by the two supporting portions of the two interfaces on both sides of the receptacle, and wherein the vehicle (V) comprises a deployable loading/unloading system configured to:
- load a receptacle from a first retracted position above the chassis to a second deployed position for which the receptacle is simultaneously bearing on the first interface and the second interface, or
- take out a receptacle from the second position bearing on the first interface and the second interface of a pair of interfaces and load it into the first retracted position.

13. A transport and storage system according to claim 11 or 12, wherein the vehicle comprises an uncoupling mechanism configured to move the cogwheel(s) (RD) of the climbing means of the vehicle from a coupled position for which the first teeth (D1) of the elongate member (OL) and the second teeth (D2) of the cogwheel (RD) are engaged, to an uncoupled position for which the cogwheel(s) (RD) provided with the second teeth (D2), on the one hand, and the elongate members (OL) provided with the first teeth (D1), on the other hand, are spaced apart with escapement between the first teeth (D1) and the second teeth (D2), and wherein the vehicle (V) comprises rolling means (Ro) for rolling on a horizontal surface, allowing the vehicle (V) to move on the horizontal surface in said uncoupled position, once the vehicle is separated from the vertical structure of the storage rack.

14. A transport and storage system according to one of claims 11 to 13, wherein the cogwheel (RD) is articulated along the rotation axis (A_{R}) on a support (S) of the vehicle (V),
and wherein the vehicle (V) is equipped with a guiding system comprising a guiding member (OG), such as a bearing roller, or a sliding pad, cooperating with a guiding wall (PG) of said profile of said elongate member,
and wherein the guiding system is configured so that the cooperation of the guiding member (OG) against the guiding wall (PG) ensures that the first teeth (D1) of said at least one toothed bar and the second teeth (D2) of the cogwheel (RD) are kept in engagement.

15. A method for manufacturing a storage rack according to one of claims 1 to 10, or a system according to one of claims 11 to 14, wherein the profile forming the elongate member (OL) is produced, possibly when having a tubular or semi-tubular cross-section, by roll forming techniques, and said folded tabs (3) are produced from the material of the openings (OV) in the wall (P_{OV}) of the profile by cutting and stamping techniques.
